# EUROPÄISCHE PATENTSCHRIFT

(11) **EP 1 405 134 B1**
(45) Veröffentlichungstag und Bekanntmachung des Hinweises auf die Patenterteilung: **08.12.2004**
(21) Anmeldenummer: 02742722.8
(22) Anmeldetag: 08.05.2002
(51) Int. Cl.: G02F 1/135

(54) **VERFAHREN UND VORRICHTUNG ZUR INTENSITÄTSABHÄNGIGEN ABSCHWÄCHUNG VON LICHT**
METHOD AND DEVICE FOR INTENSITY-DEPENDENT LIGHT MODULATION
PROCEDE ET DISPOSITIF POUR ATTENUER UNE LUMIERE EN FONCTION DE L'INTENSITE

(30) Priorität: 26.05.2001 DE 10125779
(43) Veröffentlichungstag der Anmeldung: 07.04.2004
(73) Patentinhaber: Deutsche Telekom AG, 53113 Bonn (DE)
(72) Erfinder: DULTZ, Wolfgang, 65936 Frankfurt/M. (DE); BERESNEV, Leonid, Columbia, MD 21044-2236 (US); PATRUSHEVA, Galina, Columbia, MD 21044-2236 (US)
(86) Internationale Anmeldenummer: PCT/DE2002/001658
(87) Internationale Veröffentlichungsnummer: WO 2002/097514

(56) Entgegenhaltungen:
- EP-A- 0 997 767
- WO-A-00/36462
- DE-A- 19 616 323
- DE-A- 19 731 135
- US-A- 6 137 636

## Beschreibung

### Technisches Gebiet:

Die Erfindung betrifft ein Verfahren und Vorrichtung zur intensitätsabhängigen Abschwächung von Licht, mit einem Polarisator, welcher linear in einer Eingangs-Polarisationsrichtung polarisiertes Licht passieren läßt, und einem zu diesem um wesentlichen oder um 90° gekreuzten Analysator.

### Stand der Technik:

Lichtdetektoren, wie z.B. Videokameras und CCDs, können ebenso wie das menschliche Auge Licht nur bis zu einer bestimmten Intensität einwandfrei verarbeiten. Sehr intensive Lichtquellen, wie z.B. die Sonne, Blitze oder starke künstliche Lampen verursachen Blendung des Auges oder des Lichtdetektors. Das Auge oder der Lichtdetektor werden überlastet und können bei zu hoher Lichtintensität irreparabel beschädigt oder zerstört werden.

Für das menschliche Auge bedeutet dies nicht nur, daß innerhalb des Bildes der starken Lichtquelle nur noch ein überheller Schein und keine Strukturen mehr erkennbar sind, sondern auch, daß das Bild in einer ganzen Umgebung von dem Schein überstrahlt wird.

Besonders nachteilig sind diese Effekte z.B. bei Schweißarbeiten, wo die Schweißflamme Einzelheiten der Schweißstelle überstrahlt, oder z.B. bei Piloten und Soldaten, die durch Sonne, Blendgranaten oder Mündungsfeuer geblendet werden und dadurch das Geschehen nicht mehr verfolgen können. Auch Videokameras werden geblendet und zwar oft in noch viel größerem Umfang als das menschliche Auge. Ein Grund dafür ist, daß der Dynamikbereich von Videokameras kleiner ist als derjenige des menschlichen Auges. Bei Verwendung von CCDs tritt ferner der störende Effekt auf, daß Pixel, welche mit zu hoher Lichtintensität beleuchtet werden, zum "Überlaufen" neigen, d.h. benachbarte Pixel können eine Intensität registrieren, welche bei weitem höher als sie tatsächlich auf sie einfallende Intensität, so daß erhebliche Bildfehler entstehen.

Das Auge verfügt über eine natürliche intensitätsabhängige Abschwächvorrichtung, nämlich die Iris, welche das Auge bei hoher Lichtintensität durch Verengen der Pupille schützt. Auch Kameras und andere Lichtdetektoren können mit einer intensitätsabhängigen Abschwächvorrichtung ausgerüstet sein, insbesondere mit einer verstellbaren Blende. Eine weitere Möglichkeit zur Abschwächung besteht im Vorschalten von Filtern, z.B. einem Paar von Polarisationsfiltern, welche um einen bestimmten, von der Intensität abhängigen Winkel gegeneinander verdreht werden.

Ein Nachteil derartiger Abschwächvorrichtungen ergibt sich durch ihre Trägheit, welche dazu führt, daß ein wirksamer Blendschutz z.B. gegen schnell aufleuchtende helle Lichtquellen wie etwa Blitze nicht gegeben ist.

Derartige Abschwächvorrichtungen haben den weiteren Nachteil, daß das Licht durch sie nur integral abgeschwächt wird, d.h. das gesamte Sehfeld wird einheitlich um einem bestimmten Faktor abgedunkelt, so daß helle Zonen und dunklere Zonen des Sehfeldes um den gleichen Faktor abgedunkelt werden. Dies kann bedeuten, daß das Sehfeld, um eine Blendung des Betrachters oder des Lichtdetektors durch eine helle Zone des Sehfeldes, z.B. Sonne, zu vermeiden, das Sehfeld so weit abdunkeln muß, daß in dunkleren Zonen des Sehfeldes nichts mehr erkannt werden kann. In der Fotografie ist dieser Effekt als "Gegenlicht-Effekt" bekannt.

Daher wurden spezielle Abschwächvorrichtungen entwickelt, die nicht die integrale Lichtintensität verringern, sondern das Sehfeld nur dort lokal abdunkeln, wo tatsächlich Licht hoher Intensität einfällt, während die übrigen Zonen nicht oder nur wenig abgedunkelt werden. Enthält das Sehfeld z.B, die Sonne und den sie umgebenden Himmel, so wird mit einer derartigen speziellen Abschwächvorrichtung nur die Sonne selbst wesentlich abgedunkelt, nicht jedoch der Himmel, so daß kein "Gegenlicht-Effekt" mehr besteht. Solche speziellen Abschwächvonichtungen sind mit Hilfe von optisch adressierbaren ortsauflösenden Lichtmodulatoren (OASLM) verwirklicht worden.

Ein derartiger Lichtmodulator (OASLM) umfaßt eine doppelbrechende Schicht, deren Indikatrix sich aus einer Ruhelagen-Richtung heraus um einen bestimmten Winkel dreht, wenn an die Schicht ein äußeres elektrisches Feld angelegt wird. Der Betrag der elektrischen Feldstärke sei E. Das elektrische Feld wird durch Anlegen einer Spannung an einen Plattenkondensator erzeugt, zwischen dessen Platten sich der Lichtmodulator (OASLM) befindet.

Die Polarität des elektrischen Feldes ist durch die Polarität der Spannung gegeben. Die elektrische Feldstärke kann daher +E oder -E betragen. Die Richtung der Drehung der Indikatrix aus ihrer Ruhelagen-Richtung heraus hängt von der Polarität des elektrischen Feldes (+E oder -E) ab und kehrt sich um, wenn die felderzeugende Spannung umgepolt wird. Der Betrag der Drehung bleibt bei einer Umpolung jedoch unverändert.

Der Betrag der Drehung hängt nicht allein von der elektrischen Feldstärke ab, sondern insbesondere auch von der Intensität des Lichts, welches die doppelbrechende Schicht durchtritt: der Betrag des Drehwinkels nimmt mit der Lichtintensität zu, wobei jedoch bei gegebener Feldstärke ein bestimmter maximaler Drehwinkel, im folgenden Maximalwinkel genannt, bei weiter zunehmender Lichtintensität nicht überschritten wird. Der Maximalwinkel hängt von der Feldstärke ab. Die Richtung der Indikatrix ist daher nur dann über die gesamte Fläche des Lichtmodulators gleich, wenn auch die Lichtintensität gleichförmig über diese Fläche verteilt ist. Andernfalls bilden sich in dem Lichtmodulator Zonen mit unterschiedlich gerichteter Indikatrix aus; in Zonen sehr großer Lichtintensität dreht sie sich um näherungsweise den Maximalwinkel, während sie sich in Zonen geringer Lichtintensität nur um kleine Beträge gegenüber der Ruhelagen-Richtung dreht.

Aus der DE-OS 196 16 323 A1 ist bekannt, daß dieser Effekt zur Herstellung einer Abschwächvorrichtung, welche das Sehfeld nur dort lokal abdunkelt, wo tatsächlich Licht hoher Intensität einfällt, ausgenutzt werden kann. Hierbei macht man sich vorteilhaft den Umstand zunutze, daß die Polarisationsrichtung von linear polarisiertem Licht, welches ein λ/2-Plättchen durchläuft, an der Indikatrix des doppelbrechenden Materials gespiegelt wird. Die Dicke der doppelbrechenden Schicht des Lichtmodulators wird daher so gewählt, daß der Lichtmodulator als λ/2-Plättchen wirkt. Die Stärke des elektrischen Felds E wird so gewählt, daß der Betrag des Maximalwinkels 45° beträgt.

Nun wird vor dem Lichtmodulator ein Polarisator so angeordnet, daß die Polarisationsrichtung des vom Polarisator durchgelassenen Lichts mit der Ruhelagen-Richtung einen Winkel von 45° bildet. Ferner wird hinter dem Lichtmodulator ein Analysator angeordnet, der sich in einer gegenüber dem Polarisator um 90° gekreuzten Stellung befindet.

Nun wird mittels einer Optik ein Sehfeld auf den Lichtmodulator abgebildet, welches z.B. eine sehr helle Lichtquelle auf einem dunklen Hintergrund enthält. Daher entsteht auf dem Lichtmodulator ein heller Fleck, nämlich das Bild der hellen Lichtquelle, und ein dunkle Zone, nämlich das Bild des Hintergrundes.

Das elektrische Feld E kann die Indikatrix des Lichtmodulator nur im Bereich des hellen Flecks um den Maximalwinkel, d.h. um 45°, aus der Ruhelagen-Richtung drehen. Die Indikatrix steht daher im Bereich des hellen Flecks zu der Polarisationsrichtung des Lichts, welches den Polarisator einfällt, entweder in einem Winkel von 0° oder in einem Winkel von 90°, je nach Polarität des elektrischen Feldes (+E oder -E).

Wie oben erwähnt, wird die Polarisationsrichtung beim Durchgang durch ein λ/2-Plättchen an der Richtung der Indikatrix gespiegelt. Da im Bereich des hellen Flecks der Winkel zwischen der Polarisationsrichtung des einfallenden Lichts und der Indikatrix jedoch 0° oder 90° beträgt, geht die Polarisationsrichtung bei der Spiegelung entweder in sich selbst über oder sie wird um 180° gedreht, so daß nur solches Licht den hellen Fleck verläßt, dessen Polarisation gegenüber der Eingangspolarisation entweder überhaupt nicht (0°) oder um 180° gedreht ist. In beiden Fällen, d.h. bei jeder Polarität des elektrischen Feldes (+E oder -E), erfolgt daher eine Ausfilterung durch den gekreuzt dazu stehenden Analysator, so daß das Bild der hellen Lichtquelle vollständig unterdrückt ist.

Eine andere Situation ergibt sich für den dunklen Hintergrund. Das elektrische Feld (+E oder -E) kann die Indikatrix des Lichtmodulators im Bereich der dunklen Zone nur um einen kleinen Winkel aus der Ruhelagen-Richtung drehen. Die Indikatrix bildet im Bereich der dunklen Zone mit der Eingangspolarisation einen Winkel, der sich für beide Polaritäten des elektrischen Feldes (+E oder -E) jeweils nur wenig von 45° unterscheidet. Durch die Spiegelung an der Richtung der Indikatrix wird daher die Eingangspolarisation um näherungsweise das Doppelte dieses Winkels gedreht, also um ca. 90°. Diese Polarisationsrichtung wird aber vom Analysator durchgelassen, so daß das Bild des dunklen Hintergrundes mit fast unverminderter Intensität betrachtet werden kann.

Da das doppelbrechende Material des Lichtmodulators ein Flüssigkristall, z.B. ein nematischer oder smektischer Flüssigkristall, ist, beginnt bei Anlegen eines elektrischen Feldes eine Elektrolyse, also elektrochemische Zersetzung des Materials. Um dies zu verhinden, wird anstelle eines konstanten Feldes (+E oder -E) ein Wechselfeld angelegt, indem die Feldstärke ständig mit einer bestimmten Betriebsfrequenz zwischen +E und -E umgepolt wird.

Vorzugsweise weist die Feldstärke hierbei einen möglichst rechteckigen Verlauf auf, so daß die Feldstärke zwischen jeweils konstanten Werten +E und -E wechselt, wobei die Übergangszeiten möglichst kurz gehalten werden. Wie oben erläutert, führt die obige Anordnung sowohl für beide Polaritäten des elektrischen Feldes, d.h. sowohl für +E als auch für -E, stets dazu, daß die helle Lichtquelle unterdrückt wird, nicht jedoch der dunkle Hintergrund. Die Indikatrix im Bereich des hellen Flecks dreht sich hierbei mit der Betriebsfrequenz, bezogen auf die Ruhelagen-Richtung, zwischen dem positiven und dem betragsmäßig gleich großen negativen Maximalwinkel (hier ±45°) hin und her.

Die Drehung der Moleküle oder Molekülteile des Flüssigkristalls, deren Orientierung für die Richtung der Indikatrix entscheidend ist, ist jedoch bei allen Flüssigkristallen, mit welchen große Maximalwinkel von 45° erreichbar sind, mit relativ großer Trägheit behaftet. Dies bedeutet, daß die Ansprechzeit der Indikatrix auf Lichtwechsel relativ lang ist; typische Werte liegen bei etwa 1/100 Sekunde. Plötzlich aufleuchtende Lichtquellen, wie z.B. Blitze, können daher nicht hinreichend schnell unterdrückt werden, um eine Blendung des Auges oder Detektors zu verhindern.

Bei jeder Umpolung des elektrischen Feldes geht die lichtabschwächende Wirkung vorübergehend verloren, da die Indikatrix als Folge der Umpolung auch im Bereich des hellen Flecks die Ruhelagen-Richtung durchläuft. Daher bringt eine lange Ansprechzeit den weiteren Nachteil mit sich, daß nach jeder Umpolung des elektrischen Feldes eine relativ lange Zeit vergeht, bis die lichtabschwächende Wirkung wieder erreicht ist.

Daher wird in der DE-OS 196 16 323 A1 ferner eine Abschwächvorrichtung vorgeschlagen, welche dadurch auf einen Maximalwinkel von 45° verzichten kann, daß zwei Lichtmodulatoren hintereinander angeordnet sind. Dennoch sind auch bei dieser Anordnung immer noch relativ große Maximalwinkel erforderlich, so daß auch hier nachteilhafterweise nur Flüssigkeitskristalle mit relativ langsamer Ansprechzeit zum Einsatz kommen können.

Es gibt jedoch eine Reihe von Arten von Flüssigkristallen mit sehr kurzer Ansprechzeit ihrer Indikatrix auf Lichtwechsel. Mit diesen Flüssigkristallen lassen sich allerdings keine Maximalwinkel erreichen, welche groß genug sind, um in den Anordnungen, die in der DE-OS 196 16 323 A1 vorgeschlagen sind, eingesetzt zu werden.

Ein weiterer Nachteil der genannten Abschwächeinrichtungen besteht darin, daß nur eine Polarisationsrichtung des einfallenden Lichts ausgenutzt wird, während die andere Polarisationsrichtung am Eingangspolarisator ausgefiltert wird.

Der Erfindung liegt daher die Aufgabe zu Grunde, eine Abschwächeinrichtung anzugeben, welche mit nur einem Lichtmodulator auskommt, die Verwendung von Flüssigkristallen mit sehr kurzer Ansprechzeit ihrer Indikatrix auf Lichtwechsel erlaubt, eine vollständige Unterdrückung heller Lichtquellen auch bei kleinem Maximalwinkel ermöglicht und beide Polarisationsrichtungen des einfallenden Lichten auszunutzen imstande ist.

Diese Aufgabe wird erfindungsgemäß gelöst durch eine intensitätsabhängige Abschwächvorrichtung für Licht, mit einem Polarisator, welcher in einer Eingangs-Polarisationsrichtung linear polarisiertes Licht passieren läßt, und einem zu diesem gekreuzten Analysator, welche gekennzeichnet ist durch ein erstes und ein zweites λ/2-Phasenplättchen und einen als λ/2-Phasenplättchen ausgebildeten ersten optisch adressierbaren ortsauflösenden Lichtmodulator, wobei einfallendes Licht nacheinander den Polarisator, das erste λ/2-Phasenplättchen, den ersten Lichtmodulator und das zweite λ/2-Phasenplättchen durchläuft und von dort auf den Analysator trifft, wobei
a) das erste λ/2-Phasenplättchen eine erste Indikatrix besitzt, welche
   - ohne äußeres elektrisches Feld in einer ersten Ruhelagen-Richtung verläuft,
   - bei Anliegen eines ersten äußeren elektrischen Feldes in einer ersten Auslenkungsrichtung verläuft, die gegenüber der ersten Ruhelagen-Richtung um einen ersten, von der Lichtintensität unabhängigen Winkel um die Richtung des ersten äußeren elektrischen Feldes gedreht ist, und
   - bei Anliegen eines dem ersten äußeren elektrischen Feld entgegengesetzt gleichen zweiten äußeren elektrischen Feldes in einer zweiten Auslenkungsrichtung verläuft, die gegenüber der ersten Ruhelagen-Richtung um einen zweiten Winkel gedreht ist, welcher dem ersten Winkel entgegengesetzt gleich ist,
b) der erste Lichtmodulator eine zweite Indikatrix besitzt, welche
   - ohne äußeres elektrisches Feld in einer zweiten Ruhelagen-Richtung verläuft,
   - bei Anliegen eines dritten äußeren elektrischen Feldes in einer dritten Auslenkungsrichtung verläuft, welche gegenüber der zweiten Ruhelagen-Richtung um einen dritten Winkel, um die Richtung des dritten äußeren elektrischen Feldes gedreht ist,
   - bei Anliegen eines dem dritten äußeren elektrischen Feld entgegengesetzt gleichen vierten äußeren elektrischen Feldes in einer vierten Auslenkungsrichtung verläuft, welche gegenüber der zweiten Ruhelagen-Richtung um einen dem dritten Winkel entgegengesetzt gleichen vierten Winkel gedreht ist,
   - wobei der Betrag des dritten und des vierten Winkels mit zunehmender Lichtintentsität bis zu einem bestimmten Maximalwert, nicht jedoch über diesen hinaus zunimmt und die dritte bzw. vierte Auslenkungsrichtung eine erste bzw. zweite Grenz-Auslenkungsrichtung erreicht, falls der Betrag des dritten bzw. vierten Winkels den Maximalwert erreicht,
c) das zweite λ/2-Phasenplättchen eine dritte Indikatrix besitzt, welche
   - ohne äußeres elektrisches Feld in der ersten Ruhelagen-Richtung verläuft,
   - bei Anliegen eines fünften äußeren elektrischen Feldes in der ersten Auslenkungsrichtung verläuft, und
   - bei Anliegen eines sechsten, dem fünften äußeren elektrischen Feld entgegengesetzt gleichen äußeren elektrischen Feldes in der zweiten Auslenkungsrichtung verläuft,
d) das erste und das zweite Phasenplättchen und der erste Lichtmodulator so zueinander und gegenüber dem Polarisator ausgerichtet sind, daß
   - die erste Auslenkungsrichtung und die erste Grenz-Auslenkungsrichtung parallel zueinander und parallel oder senkrecht zur Eingangs-Polarisationsrichtung verlaufen, oder
   - die zweite Auslenkungsrichtung und die zweite Grenz-Auslenkungsrichtung parallel zueinander und parallel oder senkrecht zur Eingangs-Polarisationsrichtung verlaufen,
e) an das erste Phasenplättchen das erste oder zweite äußere elektrische Feld, an den ersten Lichtmodulator das dritte oder vierte äußere elektrische Feld und an das zweite Phasenplättchen das fünfte oder sechste äußere elektrische Feld angelegt ist, und
f) das erste bzw. zweite, das dritte bzw. vierte und das fünfte bzw. sechste äußere elektrische Feld so gewählt sind, daß der erste Winkel α und der Maximalwert βmax die Bedingung 2α-βmax = n•45° + T erfüllen, wobei n=0,1,2,3,... und T eine Toleranz von ±5° ist.

Die Aufgabe wird ferner gelöst durch ein Verfahren zur intensitätsabhängigen Abschwächung von Licht, welches einen Polarisator (P1), welcher in einer Eingangs-Polarisationsrichtung (EPR1, EPR2) linear polarisiertes Licht passieren läßt, durchläuft und auf einen zu diesem im wesentlichen oder um 90° gekreuzten Analysator (P2) trifft, dadurch gekennzeichnet,
daß das Licht nacheinander den Polarisator (P1), ein erstes λ/2-Phasenplättchen (1), einen einen als λ/2-Phasenplättchen ausgebildeten ersten optisch adressierbaren ortsauflösenden ersten Lichtmodulator (3) und ein zweite λ/2-Phasenplättchen (3) durchläuft und von dort auf den Analysator (P2) trifft, wobei
a) das erste λ/2-Phasenplättchen (1) eine erste Indikatrix besitzt, welche
   - ohne äußeres elektrisches Feld in einer ersten Ruhelagen-Richtung (R1) verläuft,
   - bei Anliegen eines ersten äußeren elektrischen Feldes (+E1) in einer ersten Auslenkungsrichtung (A) verläuft, die gegenüber der ersten Ruhelagen-Richtung (R1) um einen ersten, von der Lichtintensität unabhängigen Winkel (+α) um die Richtung des ersten äußeren elektrischen Feldes (+E1) gedreht ist, und
   - bei Anliegen eines dem ersten äußeren elektrischen Feld (+E1) entgegengesetzt gleichen zweiten äußeren elektrischen Feldes (-E1) in einer zweiten Auslenkungsrichtung (B) verläuft, die gegenüber der ersten Ruhelagen-Richtung (R1) um einen zweiten Winkel (-α) gedreht ist, welcher dem ersten Winkel (+α) entgegengesetzt gleich ist,
b) der erste Lichtmodulator (2) eine zweite Indikatrix besitzt, welche
   - ohne äußeres elektrisches Feld in einer zweiten Ruhelagen-Richtung (R2) verläuft,
   - bei Anliegen eines dritten äußeren elektrischen Feldes (+E2) in einer dritten Auslenkungsrichtung (C) verläuft, welche gegenüber der zweiten Ruhelagen-Richtung (R2) um einen dritten Winkel (+β) um die Richtung des dritten äußeren elektrischen Feldes (+E2) gedreht ist,
   - bei Anliegen eines dem dritten äußeren elektrischen Feld (+E2) entgegengesetzt gleichen vierten äußeren elektrischen Feldes (-E2) in einer vierten Auslenkungsrichtung (D) verläuft, welche gegenüber der zweiten Ruhelagen-Richtung (R2) um einen dem dritten Winkel (+β) entgegengesetzt gleichen vierten Winkel (-β) gedreht ist,
   - wobei der Betrag des dritten und des vierten Winkels (+β, -β) mit zunehmender Lichtintentsität bis zu einem bestimmten Maximalwert (βmax), nicht jedoch über diesen hinaus zunimmt und die dritte bzw. vierte Auslenkungsrichtung (C, D) eine erste bzw. zweite Grenz-Auslenkungsrichtung (Cmax, Dmax) erreicht, falls der Betrag des dritten bzw. vierten Winkels (+β, -β) den Maximalwert (βmax) erreicht,
c) das zweite λ/2-Phasenplättchen (3) eine dritte Indikatrix besitzt, welche
   - ohne äußeres elektrisches Feld in der ersten Ruhelagen-Richtung (R1) verläuft,
   - bei Anliegen eines fünften äußeren elektrischen Feldes (+E3) in der ersten Auslenkungsrichtung (A) verläuft, und
   - bei Anliegen eines sechsten, dem fünften äußeren elektrischen Feld (+E3) entgegengesetzt gleichen äußeren elektrischen Feldes (-E3) in der zweiten Auslenkungsrichtung (B) verläuft,
d) das erste und das zweite Phasenplättchen (1, 3) und der erste Lichtmodulator (2) so zueinander und gegenüber dem Polarisator (P1) ausgerichtet sind, daß
   - die erste Auslenkungsrichtung (A) und die erste Grenz-Auslenkungsrichtung (Cmax) parallel zueinander und parallel oder senkrecht zur Eingangs-Polarisationsrichtung (EPR1, EPR2) verlaufen, oder
   - die zweite Auslenkungsrichtung (B) und die zweite Grenz-Auslenkungsrichtung (Dmax) parallel zueinander und parallel oder senkrecht zur Eingangs-Polarisationsrichtung (EPR1, EPR2) verlaufen,
e) an das erste Phasenplättchen (1) das erste oder zweite äußere elektrische Feld (+E1, -E1), an den ersten Lichtmodulator (2) das dritte oder vierte äußere elektrische Feld (+E2, -E2) und an das zweite Phasenplättchen (3) das fünfte oder sechste äußere elektrische Feld (+E3, -E3) angelegt ist, und
f) das erste bzw. zweite, das dritte bzw. vierte und das fünfte bzw. sechste äußere elektrische Feld (+E1, -E1, +E2, -E2, +E3, -E3) so gewählt sind, daß der erste Winkel (α) und der Maximalwert (βmax) die Bedingung 2α-βmax = n•45° + T erfüllen, wobei n=0,1,2,3,... und T eine Toleranz von ±5° ist.

Diese Anordnung bzw. dieses Verfahren erlauben einen direkten Geradeaus-Durchlichtbetrieb, d.h. das Licht kann auf einer Seite in die Anordnung einfallen und auf der gegenüberliegenden Seite parallel zur Einfallsrichtung wieder ausfallen. Wie bei einem Feldstecher stimmt die Blickrichtung des Auges in diesem Fall mit der -Blickrichtung der-Anordnung überein, was ein manuelles Anvisieren von Objekten erleichtert.

In einer bevorzugten Ausfiihrungsform sind das erste und das zweite λ/2-Phasenplättchen und der erste Lichtmodulator parallel zueinander angeordnet.

Das erste bzw. zweite äußere elektrische Feld werden bevorzugt durch einen ersten Plattenkondensator erzeugt werden, zwischen dessen Platten sich das erste Phasenplättchen befindet. Das dritte bzw. vierte äußere elektrische Feld werden bevorzugt durch einen zweiten Plattenkondensator erzeugt wird, zwischen dessen Platten sich der erste Lichtmodulator befindet. Das fünfte bzw. sechste äußere elektrische Feld werden bevorzugt durch einen dritten Plattenkondensator erzeugt, zwischen dessen Platten sich das zweite Phasenplättchen befindet.

Die Aufgabe wird ferner gelöst durch eine intensitätsabhängige Abschwächvorrichtung für Licht mit einem Polarisator, welcher in einer Eingangs-Polarisationsrichtung linear polarisiertes Licht passieren läßt, und einem zu diesem gekreuzten Analysator, gekennzeichnet durch ein erstes λ/2-Phasenplättchen, einen als λ/4-Phasenplättchen ausgebildeten zweiten optisch adressierbaren ortsauflösenden Lichtmodulator und einen Spiegel, wobei einfallendes Licht nacheinander den Polarisator, das erste λ/2-Phasenplättchen und den zweiten Lichtmodulator durchläuft, von dort auf den Spiegel trifft und danach in umgekehrter Richtung erneut den zweiten Lichtmodulator und das erste λ/2-Phasenplättchen durchläuft und von dort auf den Analysator trifft, wobei
a) das erste λ/2-Phasenplättchen eine erste Indikatrix besitzt, welche
   - ohne äußeres elektrisches Feld in einer ersten Ruhelagen-Richtung verläuft,
   - bei Anliegen eines ersten äußeren elektrischen Feldes in einer ersten Auslenkungsrichtung verläuft, die gegenüber der ersten Ruhelagen-Richtung um einen ersten, von der Lichtintensität unabhängigen Winkel um Richtung des ersten äußeren elektrischen Feldes gedreht ist, und
   - bei Anliegen eines dem ersten äußeren elektrischen Feld entgegengesetzt gleichen zweiten äußeren elektrischen Feldes in einer zweiten Auslenkungsrichtung verläuft, die gegenüber der ersten Ruhelagen-Richtung um einen zweiten Winkel gedreht ist, welcher dem ersten Winkel entgegengesetzt gleich ist,
b) der zweite Lichtmodulator eine vierte Indikatrix besitzt, welche
   - ohne äußeres elektrisches Feld in einer zweiten Ruhelagen-Richtung verläuft,
   - bei Anliegen eines siebten äußeren elektrischen Feldes in einer dritten Auslenkungsrichtung verläuft, welche gegenüber der zweiten Ruhelagen-Richtung um einen dritten Winkel, um die Richtung des siebten äußeren elektrischen Feldes gedreht ist,
   - bei Anliegen eines dem siebten äußeren elektrischen Feld entgegengesetzt gleichen achten äußeren elektrischen Feldes in einer vierten Auslenkungsrichtung verläuft, welche gegenüber der zweiten Ruhelagen-Richtung um einen dem dritten Winkel entgegengesetzt gleichen vierten Winkel gedreht ist,
   - wobei der Betrag des dritten und des vierten Winkels mit zunehmender Lichtintentsität bis zu einem bestimmten Maximalwert, nicht jedoch über diesen hinaus zunimmt und die dritte bzw. vierte Auslenkungsrichtung eine erste bzw. zweite Grenz-Auslenkungsrichtung erreicht, falls der Betrag des dritten bzw. vierten Winkels den Maximalwert erreicht,
c) das erste und das zweite Phasenplättchen und der erste Lichtmodulator so zueinander und gegenüber dem Polarisator ausgerichtet sind, daß
   - die erste und die dritte Auslenkungsrichtung parallel zueinander und parallel oder senkrecht zur Eingangs-Polarisationsrichtung verlaufen, oder
   - die zweite und die vierte Auslenkungsrichtung parallel zueinander und parallel oder senkrecht zur Eingangs-Polarisationsrichtung verlaufen,
d) an das erste Phasenplättchen das erste oder zweite äußere elektrische Feld und an denzweiten Lichtmodulator das siebte oder achte äußere elektrische Feld angelegt ist, und
e) das erste bzw. zweite und das siebte bzw. achte äußere elektrische Feld so gewählt sind, daß der erste Winkel α und der Maximalwert βmax die Bedingung 2α-βmax = n•45° + T erfüllen, wobei n=0,1,2,3,... und T eine Toleranz von ±5° ist.

Die Aufgabe wird ferner gelöst durch ein Verfahren zur intensitätsabhängigen Abschwächung von Licht, welches einen Polarisator (P1), welcher in einer Eingangs-Polarisationsrichtung (EPR1, EPR2) linear polarisiertes Licht passieren läßt, durchläuft und auf einen zu diesem im wesentlichen oder um 90° gekreuzten Analysator (P2, ST1, ST2, ST3) trifft, gekennzeichnet durch ein erstes λ/2-Phasenplättchen (1), einen als λ/4-Phasenplättchen ausgebildeten zweiten optisch adressierbaren ortsauflösenden Lichtmodulator (4) und einen Spiegel (5), wobei einfallendes Licht (10a, 10b) nacheinander den Polarisator (P1 ST1, ST2, ST3), das erste λ/2-Phasenplättehen (1) und den zweiten Lichtmodulator (4) durchläuft, von dort auf den Spiegel (5) trifft und danach in umgekehrter Richtung erneut den zweiten Lichtmodulator (4) und das erste λ/2-Phasenplättchen (1) durchläuft und von dort auf den Analysator (P2, ST1, ST2, ST3) trifft, wobei
a) das erste λ/2-Phasenplättchen (1) eine erste Indikatrix besitzt, welche
   - ohne äußeres elektrisches Feld in einer ersten Ruhelagen-Richtung (R1) verläuft,
   - bei Anliegen eines ersten äußeren elektrischen Feldes (+E1) in einer ersten Auslenkungsrichtung (A) verläuft, die gegenüber der ersten Ruhelagen-Richtung (R1) um einen ersten, von der Lichtintensität unabhängigen Winkel (+α) um Richtung des ersten äußeren elektrischen Feldes (+E1) gedreht ist, und
   - bei Anliegen eines dem ersten äußeren elektrischen Feld (+E1) entgegengesetzt gleichen zweiten äußeren elektrischen Feldes (-E1) in einer zweiten Auslenkungsrichtung (B) verläuft, die gegenüber der ersten Ruhelagen-Richtung (R1) um einen zweiten Winkel (-α) gedreht ist, welcher dem ersten Winkel (+α) entgegengesetzt gleich ist,
b) der zweite Lichtmodulator (4) eine vierte Indikatrix besitzt, welche
   - ohne äußeres elektrisches Feld in einer zweiten Ruhelagen-Richtung (R2) verläuft,
   - bei Anliegen eines siebten äußeren elektrischen Feldes (+E4) in einer dritten Auslenkungsrichtung (C) verläuft, welche gegenüber der zweiten Ruhelagen-Richtung (R2) um einen dritten Winkel (+β), um die Richtung des siebten äußeren elektrischen Feldes (+E4) gedreht ist,
   - bei Anliegen eines dem siebten äußeren elektrischen Feld (+E4) entgegengesetzt gleichen achten äußeren elektrischen Feldes (-E4) in einer vierten Auslenkungsrichtung (D) verläuft, welche gegenüber der zweiten Ruhelagen-Richtung (R2) um einen dem dritten Winkel (+β) entgegengesetzt gleichen vierten Winkel (-β) gedreht ist,
   - wobei der Betrag des dritten und des vierten Winkels (+β, -β) mit zunehmender Lichtintentsität bis zu einem bestimmten Maximalwert (βmax), nicht jedoch über diesen hinaus zunimmt und die dritte bzw. vierte Auslenkungsrichtung (C, D) eine erste bzw. zweite Grenz-Auslenkungsrichtung (Cmax, Dmax) erreicht, falls der Betrag des dritten bzw. vierten Winkels (+β, -β) den Maximalwert (βmax) erreicht,
c) das erste und das zweite Phasenplättchen (1, 2) und der erste Lichtmodulator (3) so zueinander und gegenüber dem Polarisator (P11, ST1, ST2, ST3) ausgerichtet sind, daß
   - die erste Auslenkungsrichtung (A) und die erste Grenz-Auslenkungsrichtung (Cmax) parallel zueinander und parallel oder senkrecht zur Eingangs-Polarisationsrichtung (EPR1, EPR2) verlaufen, oder
   - die zweite Auslenkungsrichtung (B) und die zweite Grenz-Auslenkungsrichtung (Dmax) parallel zueinander und parallel oder senkrecht zur Eingangs-Polarisationsrichtung (EPR1, EPR2) verlaufen,
d) an das erste Phasenplättchen (1) das erste oder zweite äußere elektrische Feld (+E1, -E1) und an den zweiten Lichtmodulator (4) das siebte oder achte äußere elektrische Feld (+E4, -E4) angelegt ist, und
e) das erste bzw. zweite und das siebte bzw. achte äußere elektrische Feld (+E1, -E1, +E4, -E4) so gewählt sind, daß der erste Winkel (α) und der Maximalwert (βmax) die Bedingung 2α-βmax = n•45° + T erfüllen, wobei n=0,1,2,3,... und T eine Toleranz von ±5° ist.

Der als λ/4-Phasenplättchen ausgebildete zweite optisch adressierbare ortsauflösende Lichtmodulator wird aufgrund der Lichtreflexion am Spiegel zweimal durchlaufen und wirkt wegen des mit der Reflexion verbundenen Phasensprungs auf die Polarisationsrichtung des Lichts wie ein als λ/2-Phasenplättchen ausgebildeter optisch adressierbarer ortsauflösender Lichtmodulator. Ein zweites λ/2-Phasenplättchen ist in dieser Anordnung nicht erforderlich, da das erste λ/2-Phasenplättchen ebenfalls zweimal durchlaufen wird.

Diese Anordnung bzw. dieses Verfahren erlauben keinen direkten Geradeaus-Durchlichtbetrieb. Ein indirekter Geradeaus-Durchlichtbetrieb kann jedoch durch geeignete Lichtumlenkeinrichtungen, z.B. weitere Spiegel, ermöglicht werden.

In einer weiteren Ausgestaltung weist diese Ausführungsform einen polarisierenden Strahlenteiler auf, welcher Polarisator und Analysator in sich vereint und diese somit gemeinsam bildet. Der polarisierende Strahlenteiler fungiert hierbei für einfallendes Licht als Polarisator und zugleich für am Spiegel reflektiertes Licht als Analysator.

Die Verwendung eines polarisierenden Strahlenteilers ermöglicht es ferner, nicht nur eine Polarisationsrichtung einer erfindungsgemäßen intensitätsabhängigen Abschwächung zu unterwerfen und die dazu senkrechte Polarisationsrichtung mittels des Polarisators auszublenden, sondern vielmehr beide Polarisationsrichtungen zugleich einer erfindungsgemäßen intensitätsabhängigen Abschwächung zu unterwerfen, so daß vorteilhafterweise keine Polarisationsrichtung ausgeblendet werden muß. Diese Ausführungsform. der Erfindung arbeitet somit unabhängig von der Polarisation des abzuschwächenden Lichts.

Bei dieser Ausführungsform der Erfindung wird das einfallende Licht durch den polarisierenden Strahlenteiler zerlegt in einen linear polarisierten ersten Teilstrahl, welcher im polarisierenden Strahlenteiler abgelenkt wird, und in einen zum ersten Teilstrahl senkrecht linear polarisierten zweiten Teilstrahl, welcher im polarisierenden Strahlenteiler nicht abgelenkt wird. Beide Teilstrahlen werden nun getrennt voneinander erfindungsgemäßen intensitätsabhängigen Abschwächung unterzogen. Sowohl der erste und als auch der zweite Teilstrahl durchlaufen dabei getrennt voneinander jeweils das erste λ/2-Phasenplättchen und den zweiten Lichtmodulator und treffen auf den Spiegel. Von dort durchlaufen sie in umgekehrter Reihenfolge erneut den zweiten Lichtmodulator und das erste λ/2-Phasenplättchen und gelangen erneut in den polarisierenden Strahlenteiler.

Dort wird der erste Teilstrahl zerlegt wird in einen dritten Teilstrahl, welcher parallel zum ersten Teilstrahl linear polarisiert ist und im polarisierenden Strahlenteiler abgelenkt wird, und in einen zum ersten Teilstrahl senkrecht linear polarisierten vierten Teilstrahl, welcher im polarisierenden Strahlenteiler nicht abgelenkt wird.

Der zweite Teilstrahl wird nach dem erneuten Eintritt in den polarisierenden Strahlenteiler zerlegt in einen fünften Teilstrahl, welcher senkrecht zum zweiten Teilstrahl linear polarisiert ist und im polarisierenden Strahlenteiler abgelenkt wird, und in einen zum zweiten Teilstrahl parallel linear polarisierten sechsten Teilstrahl, welcher im polarisierenden Strahlenteiler nicht abgelenkt wird. Der sechste Teilstrahl ist somit zu dem einfallenden Licht entgegengesetzt parallel gerichtet. Der vierte und der fünfte Teilstrahl sind senkrecht zueinander polarisiert.

Bevorzugt werden der vierte und/oder der fünfte Teilstrahl der Beobachtung oder Auswertung zugeführt, da diese gegenüber dem einfallenden Licht abgelenkt sind. Die Summe der Intensitäten des vierten und fünften Teilstrahls hängt erfindungsgemäß nicht vom Polarisationszustand, sondern nur von der Intensität des einfallenden Lichts ab. Die im Polarisationszustand des einfallenden Lichts enthaltende Information geht somit nicht verloren, sondern ist in der Summe des vierten und fünften Teilstrahls enthalten.

In einer bevorzugten Ausführungsform sind das erste λ/2-Phasenplättchen, der zweite Lichtmodulator und der Spiegel parallel zueinander angeordnet, so daß senkrecht einfallendes Licht in sich selbst reflektiert wird.

Zwischen dem polarisierenden Strahlenteiler und dem ersten λ/2-Phasenplättchen können eine oder mehrere Lichtablenkflächen angeordnet sein, welche den ersten bzw. den zweiten Teilstrahl so ablenken, daß der erste und der zweite Teilstrahl parallel zueinander verlaufen.

Der polarisierende Strahlenteiler kann ferner selbst mindestens eine Lichtablenkfläche aufweisen, welche den ersten bzw. den zweiten Teilstrahl so ablenkt, daß der erste und der zweite Teilstrahl parallel zueinander verlaufen.

In einer bevorzugten Weiterbildung dieser Ausführungsform ist der polarisierende Strahlenteiler so geformt und angeordnet, daß der Weg des vierten Teilstrahls mit dem Weg des fünften Teilstrahls zusammenfällt, so daß sie gemeinsam einer Beobachtung oder Auswertung zuführbar sind.

Vor dem Spiegel kann zur Unterdrückung von Streulicht ein Kollimator angeordnet sein.

Eine bevorzugte Ausführungsform der Erfindung weist ein Objektiv auf, welches ein Sehfeld auf den Lichtmodulator abbildet. In einer Weiterbildung dieser Ausführungsform ist ein Okular so angeordnet, daß das Bild des Sehfeldes mittels des Okulars betrachtbar ist. Eine derartige Ausführungsform der Erfindung ist somit eine Art Teleskop, welches die Intensität heller Punkte des Sehfeldes prozentual mehr abschwächt als diejenige weniger heller Punkte.

Als λ/2-Phasenplättchen werden erfindungsgemäß solche verwendet, die eine Indikatrix besitzen, deren Richtung durch Anlegen eines elektrischen Feldes beeinflußt werden kann, wobei diese Richtung nicht von der Lichtintensität abhängt und über die gesamte Fläche des λ/2-Phasenplättchens die gleiche ist. Die Drehung der Indikatrix beruht auf einer durch das elektrische Feld stimulierten Umorientierung von Molekülen oder Molekülteilen, wovon die makroskopische Orientierung des λ/2-Phasenplättchens selbst unberührt bleibt. Derartige λ/2-Phasenplättchen sind im Stand der Technik seit langem bekannt.

Als Lichtmodulator wird erfindungsgemäß ein solcher verwendet, der im Gegensatz zu den λ/2-Phasenplättchen eine solche Indikatrix besitzt, deren Richtung sowohl durch Anlegen eines elektrischen Feldes als auch durch die Lichtintensität beeinflußt werden kann. Derartige Lichtmodulatoren werden im Stand der Technik als "optisch adressierbare ortsauflösende Lichtmodulatoren" oder "OASLMs" bezeichnet, wie bereits unter Bezug auf den Stand der Technik erläutert wurde. In der vorliegenden Erfindung wird ein derartiger Lichtmodulator als nichtlineares optisches Filter eingesetzt.

Hierbei kommt bevorzugt ein Lichtmodulator mit einer doppelbrechende Flüssigkristall-Schicht zum Einsatz, die z.B. ein Flüssigkristallfilm aus chiralem smektisch-C-Material sein kann, dessen Moleküle eine ferroelektrische deformierbare Helix besitzen.

Flüssigkristalle werden im konstanten elektrischen Feld durch Elektrolyse zersetzt. Um dies zu verhindern, liegt in einer bevorzugten Ausführungsform am dritten bzw. vierten Plattenkondensator eine Wechselspannung mit im wesentlichen rechteckförmigem zeitlichen Verlauf an, so daß das dritte und das vierte bzw. das siebte und das achte elektrische Feld einander fortlaufend ablösen.

Das elektrische Feld im dritten bzw. vierten Kondensator, d.h. das am ersten bzw. zweiten Lichtmodulator anliegende elektrische Feld, wird somit fortlaufend umgepolt. Die zweite bzw. vierte Indikatrix drehen sich bei jeder Umpolung zwischen dem dritten Winkel +β und dem vierten Winkel -β hin und her, wobei diese Winkel auf die jeweilige Ruhelagen-Richtung der zweiten bzw. vierten Indikatrix bezogen sind und der Betrag der Winkel +β und -β bei hoher Lichtintensität jeweils höchstens den Maximalwert βmax erreichen kann.

Die Winkelbedingung 2α-βmax = n•45° + T ist in diesem Fall nur jeweils für eine Polarität des elektrischen Feldes im zweiten bzw. vierten Plattenkondensator erfüllt. Daher muß, falls das am ersten bzw. zweiten Lichtmodulator anliegende elektrische Feld umgepolt wird, in Phase dazu auch das an den bzw. dem λ/2-Phasenplättchen anliegende elektrische Feld jeweils umgepolt werden, so daß die erste und dritte Indikatrix bzw. die erste Indikatrix sich jeweils zwischen dem ersten Winkel +α und dem zweiten Winkel -α hin und her drehen, bezogen jeweils die Ruhelagen-Richtung der ersten bzw. dritten Indikatrix, wodurch die Winkelbedingung für beide Polaritäten erfüllt wird. Dies geschieht, indem auch am ersten bzw. dritten Plattenkondensator jeweils eine Wechselspannung mit im wesentlichen rechteckförmigem zeitlichen Verlauf angelegt wird.

In dieser Ausführungsform der Erfindung erfolgen daher die Nulldurchgänge aller Wechselspannungen jeweils gleichzeitig. In einer bevorzugten Ausfuhrungsibrm stammen alle Wechselspannungen aus einer gemeinsamen Spannungsquelle, wobei die einzelnen Feldstärken durch geeignete Spannungsstellvorrichtungen, etwa Potentiometer, einstellbar sein können.

Das erste bzw. zweite äußere elektrische Feld werden bevorzugt durch einen ersten Plattenkondensator erzeugt, zwischen dessen Platten sich das erste Phasenplättchen befindet. Das siebte bzw. achte äußere elektrische Feld werden bevorzugt durch einen vierten Plattenkondensator erzeugt, zwischen dessen Platten sich der zweite Lichtmodulator befindet.

Die Platten der Plattenkondensatoren können durch für Licht zumindest teildurchlässige elektrisch leitende Schichten, z.B. aus Indium-Zinn-Oxid, gebildet und unmittelbar auf den Lichtdurchtrittsflächen der Phasenplättchen bzw. der Lichtmodulatoren oder mit Hilfe eines transparenten Trägermaterials in einem Abstand parallel zu denselben angeordnet sein. In einer anderen Ausführungsform bestehen die Schichten aus einer dünnen Lage von Metall. Kurzbeschreibung der Zeichnung, in welcher zeigen:
- Fig. 1: eine schematische Querschnittdarstellung einer Ausführungsform einer erfindungsgemäßen Vorrichtung für Durchlichtbetrieb einschließlich der elektrischen Beschaltung sowie der hierdurch erzeugten elektrischen Felder, wobei ein Lichtstrahl hoher Intensität einfällt,
- Fig. 2a: eine schematische perspektivische Darstellung der Vorrichtung von Fig. 1 zum gleichen Zeitpunkt wie Fig. 1, wobei die elektrische Beschaltung weggelassen ist,
- Fig. 2b: die Vorrichtung von Fig. 2a, wobei die elektrischen Felder eine gegenüber Fig. 2a umgekehrte Polarität aufweisen,
- Fig. 3: die Vorrichtung von Fig. 2a bzw. 2b, wobei ein Lichtstrahl geringer Intensität einfällt,
- Fig. 4: eine Querschnittdarstellung einer anderen Ausführungsform der Erfindung einschließlich der elektrischen Beschaltung und der hierdurch erzeugten elektrischen Felder,
- Fig. 5a: eine schematische perspektivische Darstellung der Vorrichtung von Fig. 4, in welche ein Lichtstrahl hoher Intensität einfällt, wobei die elektrische Beschaltung weggelassen ist,
- Fig. 5b: die Ausführungsform von Fig. 5a, wobei ein Lichtstrahl geringer Intensität einfällt,
- Fig. 6: eine schematische Darstellung einer Ausführungsform einer erfindungsgemäßen Vorrichtung mit polarisierendem Strahlenteiler, in welche ein Lichtstrahl geringer Intensität einfällt, wobei die elektrische Beschaltung weggelassen ist,
- Fig. 7 und 8: schematische Darstellungen weiterer Ausführungsformen einer erfindungsgemäßen Vorrichtung, wobei die elektrische Beschaltung weggelassen ist,
- Fig.9a: eine weitere Ausführungsformen einer erfindungsgemäßen Vorrichtung, wobei die elektrische Beschaltung weggelassen ist, betrachtet in einer Richtung quer zum einfallenden und quer zum ausfallenden Lichtstrahl,
- Fig. 9b: die Vorrichtung von Fig. 9a, betrachtet in Richtung des einfallenden Lichtstrahls, und
- Fig. 9c: die Vorrichtung von Fig. 9a, betrachtet gegen die Richtung des ausfallenden Lichtstrahls.

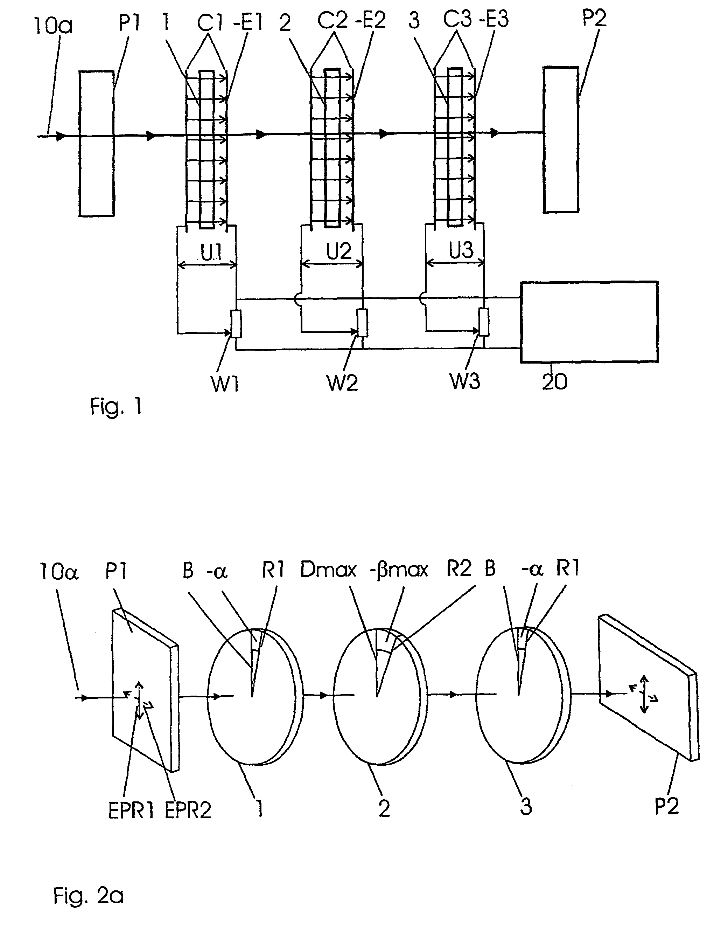

Fig. 1 zeigt eine Querschnittdarstellung einer Ausfuhrungsform einer erfindungsgemäßen Vorrichtung für Durchlichtbetrieb einschließlich der elektrischen Beschaltung sowie der hierdurch erzeugten elektrischen Felder. Ein Lichtstrahl 10a hoher Intensität fällt auf den Polarisator P1 ein. Die von diesem durchgelassene Lichtkomponente durchläuft ein erstes λ/2-Phasenplättchen 1, einen als λ/2-Phasenplättchen ausgebildeten ersten optisch adressierbaren ortsauflösenden Lichtmodulator 2 und ein zweites λ/2-Phasenplättchen 3 und trifft auf einen zum Polarisator P1 gekreuzten Analysator P2.

Das erste λ/2-Phasenplättchen 1, der Lichtmodulator 2 und das zweite λ/2-Phasenplättchen 3 sind jeweils zwischen den Platten eines Plattenkondensators C1, C2, C3 angeordnet. Die Platten der Plattenkondensatoren C1, C2, C3 sind durch lichtdurchlässige elektrisch leitende Schichten gebildet, welche z.B. jeweils aus einer dünnen Lage von aufgedampftem Metall oder aus Indium-Zinn-Oxid bestehen.

Mit Hilfe einer Spannungsquelle 20 und Potentiometern W1, W2, W3 ist an den ersten Plattenkondensator C1 eine Spannung U1, an den zweiten Plattenkondensator C2 eine Spannung U2 und an den dritten Plattenkondensator C3 eine Spannung U3 angelegt, so daß in den Plattenkondensatoren C1, C2, C3 jeweils ein elektrisches Feld entsteht.

Das erste λ/2-Phasenplättchen 1, der Lichtmodulator 2 und das zweite λ/2-Phasenplättchen 3 enthalten bevorzugt Flüssigkristalle, welche sich in einem elektrischen Feld von gleichbleibender Polarität per Elektrolyse zersetzen. Um dies zu verhindern, gibt die Spannungsquelle 20 eine Wechselspannung Uo mit vorzugsweise einem im wesentlichen rechteckförmigen zeitlichen Verlauf ab, so daß die Spannungen U1, U2, U3 und damit auch die elektrischen Felder in den Plattenkondensatoren C1, C2, C3 ständig umgepolt werden. Der rechteckförmige zeitliche Verlauf der Wechselspannung wird bevorzugt gewählt, um die Übergangszeiten beim Umschalten zwischen positiver und negativer Polarität bzw. umgekehrt so kurz wie möglich zu halten. Der Vorteil kurzer Übergangszeiten wird unten noch erläutert.

Das erste Potentiometer W1 ist so eingestellt, daß das erste λ/2-Phasenplättchen 1 im Plattenkondensator C1 abwechselnd in einem ersten äußeren elektrischen Feld +E1 und einem hierzu entgegensetzt gleichen zweiten äußeren elektrischen Feld -E1 befindet. Analog dazu sind das zweite bzw. dritte Potentiometer W2, W3 so eingestellt, daß der Lichtmodulator 2 im Plattenkondensator C2 bzw. das zweite λ/2-Phasenplättchen 3 im Plattenkondensator C3 sich abwechselnd in einem dritten und einem diesem entgegensetzt gleichen vierten äußeren elektrischen Feld +E2, -E2 bzw. in einem fünften und einem diesem entgegensetzt gleichen sechsten äußeren elektrischen Feld +E3, -E3 befinden. Die elektrischen Felder +E1, +E2, +E3 werden durch die Wechselspannungen U1, U2, U3 zyklisch in die jeweils entgegengesetzt gleichen elektrischen Felder E1, -E2, -E3 umgepolt, und umgekehrt. Diese Umpolungen finden jeweils gleichzeitig statt, da alle drei Spannungen U1, U2, U3 aus der gemeinsamen Spannungsquelle 20 stammen und analog zur Wechselspannung Uo verlaufen.

In Fig. 1 ist die Situation zu einem Zeitpunkt dargestellt, in welchem sich das erste λ/2-Phasenplättchen 1 im Feld -E1, der Lichtmodulator 2 im Feld -E2 und das zweite λ/2-Phasenplättchen 3 im Feld -E3 befindet. Die elektrischen Felder -E1, -E2, -E3 sind in Fig. 1 jeweils durch eine Mehrzahl von nach rechts verlaufenden Pfeilen dargestellt.

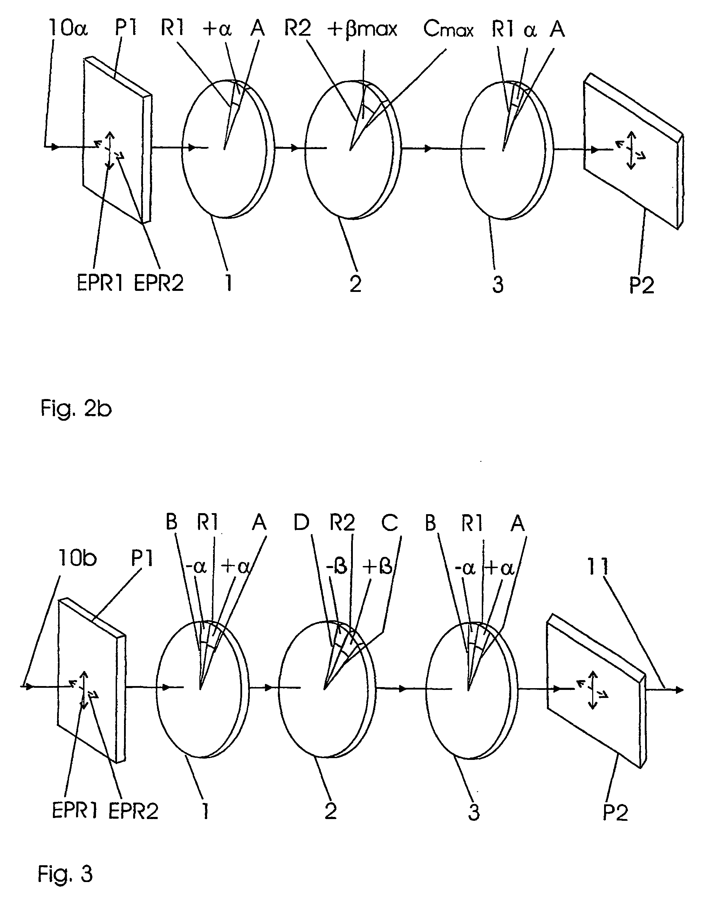

Nun wird auf die Fig. 2a und 2b Bezug genommen, welche schematische perspektivische Darstellungen der Vorrichtung von Fig. 1 zeigen, wobei die Plattenkondensatoren und ihre elektrische Beschaltung aus Gründen der Übersichtlichkeit weggelassen sind. Drehungen im Uhrzeigersinn werden im Folgenden durch Winkel mit positivem Vorzeichen und Drehungen gegen den Uhrzeigersinn durch Winkel mit negativem Vorzeichen gekennzeichnet.

Der Lichtstrahl 10a von hoher Intensität fällt auf den Polarisator P1 ein. Dieser ist so orientiert, daß er nur eine Lichtkomponente mit einer ersten Eingangs-Polarisationsrichtung EPR1 passieren läßt; auf die dazu senkrechte zweite Polarisationsrichtung EPR2 wird unten noch Bezug genommen. Nachdem die Lichtkomponente mit der Polarisationsrichtung EPR1 den Polarisator P1 verlassen hat, trifft sie auf das erste λ/2-Phasenplättchen 1.

Das erste λ/2-Phasenplättchen 1 besitzt eine erste Indikatrix, welche ohne äußeres elektrisches Feld in einer ersten Ruhelagen-Richtung R1 verläuft. Wenn jedoch am ersten λ/2-Phasenplättchen 1 das erste bzw. zweite äußere elektrische Feld +E1 bzw. -E1 (Fig. 1) angelegt wird, orientieren sich dessen Moleküle oder Teile davon so um, daß sich die erste Indikatrix aus der ersten Ruhelagen-Richtung R1 heraus in eine erste bzw. zweite Auslenkungsrichtung A bzw. B dreht, die gegenüber der ersten Ruhelagen-Richtung R1 um einen ersten bzw. einen diesem entgegengesetzt gleichen zweiten Winkel +α, -α um die Richtung des elektrischen Feldes +E1 bzw. -E1 gedreht ist. Die Winkel +α, -α sind von der Lichtintensität unabhängig.

Nachdem das Licht das erste λ/2-Phasenplättchen 1 durchlaufen hat, trifft es auf den ersten Lichtmodulator 2. Dieser besitzt eine zweite Indikatrix, welche ohne äußeres elektrisches Feld in einer zweiten Ruhelagen-Richtung R2 verläuft. Wenn jedoch am ersten Lichtmodulator 2 das dritte bzw. vierte äußere elektrische Feld +E2, -E2 (Fig. 1) angelegt wird, dreht sich die zweite Indikatrix aus der zweiten Ruhelagen-Richtung R2 heraus in eine dritte bzw. vierte Auslenkungsrichtung C bzw. D, welche gegenüber der zweiten Ruhelagen-Richtung R2 um einen dritten bzw. einen diesem entgegengesetzt gleichen vierten Winkel +β, -β um die Richtung des elektrischen Feldes +E2 bzw. -E2 gedreht sind. Der Betrag des dritten bzw. vierten Winkels +β bzw. -β nimmt mit zunehmender Lichtintentsität bis zu einem bestimmten Maximalwert βmax, nicht jedoch über diesen hinaus zu, so daß die dritte bzw. vierte Auslenkungsrichtung C bzw. D eine erste bzw. zweite Grenz-Auslenkungsrichtung Cmax, Dmax erreichen, falls der Betrag des dritten bzw. vierten Winkels +β bzw. -β den Maximalwert βmax erreicht.

Im folgenden wird aus Gründen der besseren Verständlichkeit angenommen, der Lichtstrahl 10a sei so intensiv, daß der Betrag des dritten bzw. vierten Winkels +β den Maximalwert βmax annimmt, so daß die dritte bzw. vierte Auslenkungsrichtung C bzw. D mit der ersten bzw. zweiten Grenz-Auslenkungsrichtung Cmax bzw. Dmax übereinstimmen. Die zweite Indikatrix verläuft in diesem Fall der ersten bzw. zweiten Grenz-Auslenkungsrichtung Cmax bzw. Dmax.

Anschließend trifft das Licht auf das zweite λ/2-Phasenplättchen 2. Dieses besitzt eine dritte Indikatrix, welche ohne äußeres elektrisches Feld in der ersten Ruhelagen-Richtung R1 verläuft und im fünften bzw. sechsten äußeren elektrischen Feld +E3 bzw. -E3 (Fig. 1) aus der ersten Ruhelagen-Richtung R1 heraus um den ersten bzw. zweiten, von der Lichtintensität unabhängigen Winkel +α bzw. -α in die erste bzw. zweite Auslenkungsrichtung A bzw. B gedreht ist. Die dritte Indikatrix verläuft somit immer parallel zur ersten Indikatrix. In einer bevorzugten Ausführungsform der Erfindung sind daher das erste und das zweite λ/2-Phasenplättchen 1, 2 baugleich und die an diese angelegten elektrischen Felder -E1 und -E3 bzw. +E1 und +E3 von jeweils gleichem Betrag. Nach Passieren des zweiten λ/2-Phasenplättchens 2 trifft das Licht auf den Analysator P2, der sich erfindungsgemäß in gekreuzter Stellung zum Polarisator 1 befindet. Diese Stellung des Analysators P2 ist in Fig. 2a, 2b gekennzeichnet durch einen durchgezogenen horizontalen Doppelpfeil.

Die gegenseitige Orientierung der Eingangs-Polarisationsrichtung EPR1, der ersten Ruhelagen-Richtung R1 und der zweiten Ruhelagen-Richtung R2 ergibt sich erfindungsgemäß durch folgende Bedingungen:
(a) der erste Winkel α und der Maximalwert βmax die erfüllen Bedingung 2a-βmax = n•45° + T, wobei n=0,1,2,3,... und T eine Toleranz von ±5° ist,
(b) entweder die erste Auslenkungsrichtung A und die erste Grenz-Auslenkungsrichtung Cmax stehen beide parallel oder senkrecht zur Eingangs-Polarisationsrichtung EPR1,
   oder die zweite Auslenkungsrichtung B und die zweite Grenz-Auslenkungsrichtung Dmax stehen beide entweder parallel oder senkrecht zur Eingangs-Polarisationsrichtung EPR1

Die unter (a) genannte Bedingung läßt sich durch geeignete Wahl der äußeren elektrischen Felder +E1 bzw. -E1, +E2 bzw. -E2, und +E3 bzw. -E3 erfüllen. Die unter (b) genannte Bedingung wird erfüllt, indem das erste und das zweite λ/2-Phasenplättchen 1, 3 sowie der Lichtmodulator 2 in entsprechender Orientierung in die Vorrichtung von Fig. 2a eingebaut werden.

Nun wird auf Fig. 2a Bezug genommen, die Vorrichtung von Fig. 1 zum gleichen Zeitpunkt wie Fig. 1 zeigt, d.h. es liegen die elektrischen Felder -E1, - E2, -E3 an.

Die in Fig. 2a dargestellte Ausführungsform der Erfindung entspricht bezüglich der Bedingung (a) dem Fall n=0, T=0, wobei die elektrischen Felder durch Einstellen der Potentiometer W1, W2, W3 (Fig. 1) erfindungsgemäß so gewählt sind, daß die unter (a) genannte Bedingung erfüllt ist. Bezüglich der Bedingung (b) entspricht die in Fig. 2a dargestellte Ausführungsform der Erfindung dem Fall, daß die zweite Auslenkungsrichtung B und die zweite Grenz-Auslenkungsrichtung Dmax beide parallel zur Eingangs-Polarisationsrichtung EPR1 stehen. Daraus ergibt sich für n=0, T=0, daß die zweite Ruhelagen-Richtung R2 gegenüber der EPR1-Richtung einen doppelt so großen Winkel einnimmt wie die erste Ruhelagen-Richtung R1.

Allgemein wird die Polarisationsrichtung von linear polarisiertem Licht beim Durchgang durch ein λ/2-Plättchen an der Richtung der Indikatrix des λ/2-Plättchens gespiegelt. Dieser Effekt wird von der Erfindung ausgenutzt, wie im folgenden erläutert wird.

Nachdem die Lichtkomponente mit der Polarisationsrichtung EPR1 den Polarisator P1 verlassen hat, trifft sie auf das erste λ/2-Phasenplättchen 1. Dieses besitzt eine erste Indikatrix, welche um einen zweiten Winkel -α aus der ersten Ruhelagen-Richtung R1 heraus in eine zweite Auslenkungsrichtung B gedreht ist, da das zweite elektrische Feld -E1 anliegt. Dieser Winkel ist von der Lichtintensität unabhängig. Das erste Phasenplättchen 1 ist ferner gemäß Bedingung (a) gegenüber dem Polarisator P1 so ausgerichtet, daß die zweite Auslenkungsrichtung B parallel zur Eingangs-Polarisationsrichtung EPR1 verläuft.

Die aus dem Polarisator P1 kommende Lichtkomponente mit der Polarisationsrichtung EPR1 findet daher im ersten λ/2-Phasenplättchen 1 eine erste Indikatrix vor, welche zur Polarisationsrichtung EPR1 parallel steht. Eine Spiegelung der Polarisationsrichtung an der ersten Indikatrix ergibt daher, daß die Polarisationsrichtung EPR1 in sich selbst übergeht. Bei Durchgang durch das erste λ/2-Phasenplättchen 1 erfolgt daher keine Änderung der Polarisationsrichtung.

Anschließend trifft das Licht auf den ersten Lichtmodulator 2. Dieser besitzt eine zweite Indikatrix, welche um einen vierten Winkel -β aus der zweiten Ruhelagen-Richtung R2 heraus gedreht ist, da das Feld -E2 anliegt. Aufgrund der hohen Intensität des Lichtstrahls 10a erreicht der vierte Winkel - β am Einfallsort des Lichtstrahls in den Lichtmodulator 2 den maximalen Betrag βmax, so daß der vierte Winkel -β in Fig. 2a den Wert -βmax aufweist. Die zweite Indikatrix verläuft somit in der zweiten Grenz-Auslenkungsrichtung Dmax.

Der erste Lichtmodulator 2 ist gemäß Bedingung (a) so gegenüber dem Polarisator P1 ausgerichtet, daß die zweite Grenz-Auslenkungsrichtung Dmax parallel sowohl zur zweiten Auslenkungsrichtung B als auch zur Eingangs-Polarisationsrichtung EPR1 verläuft. Das in EPR1-Richtung polarisiert in den ersten Lichtmodulator 2 einfallende Licht findet daher an seinem Einfallsort in den Lichtmodulator 2 die zweite Indikatrix parallel zur Polarisationsrichtung EPR1 stehend vor. Beim Durchgang durch den ersten Lichtmodulator 2 geht die Polarisationsrichtung EPR1 somit erneut in sich selbst über, so daß wiederum keine Änderung der Polarisationsrichtung erfolgt.

Anschließend trifft das weiterhin in EPR1-Richtung polarisierte Licht auf das zweite λ/2-Phasenplättchen 2. Dieses besitzt eine dritte Indikatrix, welche aus der ersten Ruhelagen-Richtung R1 heraus um den zweiten, von der Lichtintensität unabhängigen Winkel -α in die zweite Auslenkungsrichtung B gedreht ist, da das Feld -E3 anliegt. Gemäß Bedingung (a) verläuft die zweite Auslenkungsrichtung B parallel zur Eingangs-Polarisationsrichtung EPR1. Beim Durchgang durch das zweite λ/2-Phasenplättchen 3 geht die Polarisationsrichtung EPR1 somit erneut in sich selbst über, so daß wiederum keine Änderung der Polarisationsrichtung erfolgt.

Daher trifft das Licht mit der Eingangs-Polarisationsrichtung EPR1 auf den Analysator P2, welcher erfindungsgemäß in gekreuzter Stellung zum Polarisator P1 steht, so daß das Licht vom Analysator P2 vollständig ausgefiltert wird.

Nun wird auf Fig. 2b Bezug genommen, welche die Vorrichtung von Fig. 2a zeigt, wobei wiederum ein Lichtstrahl 10a hoher Intensität einfällt, die elektrischen Felder jedoch eine gegenüber Fig. 2a umgekehrte Polarität aufweisen. In Fig. 2b ist demnach die Situation zu einem Zeitpunkt dargestellt, in welchem sich das erste λ/2-Phasenplättchen 1 im Feld +E1, der Lichtmodulator 2 im Feld +E2 und das zweite λ/2-Phasenplättchen 3 im Feld +E3 befindet.

Weiterhin gilt, daß -Bedingung (a) für den Fall n=0, T=0 realisiert ist und gemäß Bedingung (b) die zweite Auslenkungsrichtung B und die zweite Grenz-Auslenkungsrichtung Dmax beide parallel zur Eingangs-Polarisationsrichtung EPR1 stehen.

Das erste λ/2-Phasenplättehen 1 weist zum Zeitpunkt von Fig. 2b eine erste Indikatrix auf, welche aus der ersten Ruhelagen-Richtung R1 heraus in die erste Auslenkungsrichtung A gedreht ist, die gegenüber der ersten Ruhelagen-Richtung R1 um einen ersten Winkel +α gedreht ist, da das Feld +E1 anliegt. Die erste Auslenkungsrichtung A ist somit um das Doppelte des ersten Winkels +α, also um 2α, gegenüber der zweiten Auslenkungsrichtung B und damit auch gegenüber der Eingangs-Polarisationsrichtung EPR1 gedreht. Dieser Winkel ist von der Lichtintensität unabhängig.

Die den Polarisator P1 verlassende Lichtkomponente mit der Polarisationsrichtung EPR1 findet daher im ersten λ/2-Phasenplättchen 1 eine erste Indikatrix vor, welche mit der Polarisationsrichtung EPR1 einen Winkel 2α bildet. Die beim Durchgang durch das erste λ/2-Phasenplättehen 1 erfolgende Spiegelung der Polarisationsrichtung an der ersten Indikatrix ergibt daher eine Drehung der Polarisationsrichtung EPR1 um einen Winkel 4α.

Nachdem das Licht das erste λ/2-Phasenplättchen 1 durchlaufen hat, trifft es daher mit einer um den Winkel 4α gegenüber der Eingangs-Polarisationsrichtung EPR1 gedrehten Polarisationsrichtung auf den ersten Lichtmodulator 2. Dieser besitzt eine zweite Indikatrix, die im elektrischen Feld +E2 aufgrund der hohen Intensität des Lichtstrahls 10a am Ort des Lichteinfalls in den Lichtmodulator 2 in der ersten Grenz-Auslenkungsrichtung Cmax verläuft, welche gegenüber der zweiten Ruhelagen-Richtung R2 um Maximalwert βmax gedreht ist. Aufgrund der Bedingung (a) folgt für n=0 und T=0, daß βmax = 2α und somit 2βmax = 4α ist.

Die erste Grenz-Auslenkungsrichtung Cmax ist ihrerseits ebenfalls aber um den Winkel βmax gegenüber der zweiten Ruhelagen-Richtung R2 und daher am Ort des Lichteinfalls in den Lichtmodulator 2 um den Winkel 2βmax gegenüber der Eingangs-Polarisationsrichtung EPR1 gedreht. Die Polarisationsrichtung des in den ersten Lichtmodulator 2 einfallenden Lichts ist also erfindungsgemäß auch in Fig. 2b mit der Richtung der zweiten Indikatrix identisch. Beim Durchgang durch den ersten Lichtmodulator 2, d.h. bei Spiegelung der Polarisationsrichtung an der Richtung der zweiten Indikatrix, ändert sich diese Polarisationsrichtung also nicht, sondern geht in sich selbst über. Das Licht verläßt daher den ersten Lichtmodulator mit einer Polarisationsrichtung, welche weiterhin gegenüber der Eingangs-Polarisationsrichtung EPR1 um den Winkel 4α gedreht ist.

Dieses Licht trifft anschließend auf das zweite λ/2-Phasenplättchen 2, das eine dritte Indikatrix aufweist, welche im fünften äußeren elektrischen Feld +E3 aus der ersten Ruhelagen-Richtung R1 heraus um den von der Lichtintensität unabhängigen Winkel +α in die erste Auslenkungsrichtung A gedreht ist, was bedeutet, daß die dritte Indikatrix im Feld +E3 mit der Eingangs-Polarisationsrichtung EPR1 (Polarisationsrichtung 0°) einen Winkel 2α bildet.

Dieser Winkel ist um 2α kleiner und damit halb so groß wie der Winkel 4α, welchen die Polarisationsrichtung des Lichts beim Auftreffen aus das zweite λ/2-Phasenplättchen 2 mit der Eingangs-Polarisationsrichtung EPR1 einschließt. Die Spiegelung der Polarisationsrichtung an der dritten Indikatrix ergibt daher eine Drehung der Polarisationsrichtung um einen Winkel von -4α, d.h. es erfolgt eine Drehung zurück auf die Eingangs-Polarisationsrichtung EPR1.

Daher trifft das Licht mit der Eingangs-Polarisationsrichtung EPR1 auf den Analysator P2, welcher erfindungsgemäß in gekreuzter Stellung zum Polarisator P1 steht, so daß das Licht vom Analysator P2 vollständig ausgefiltert wird.

Erfindungsgemäß ist es demnach Folge der Einhaltung der Bedingungen (a) und (b), daß die Anordnung von Fig. 2a bzw. 2b einen Lichtstrahl 10a von hinreichend hoher Intensität unabhängig von der momentanen Polarität der Wechselspannung Uo stets blockiert.

Nun wird auf Fig. 3 Bezug genommen, welche die Vorrichtung von Fig. 2a bzw. 2b zeigt, wobei ein Lichtstrahl 10b geringer Intensität einfällt. In Fig. 3 ist aus Gründen der Anschaulichkeit gleichzeitig die Situation bei Anliegens der elektrischen Felder +E1, +E2, +E3 und bei Anliegens der umgepolten Felder -E1, -E2, -E3 am ersten Phasenplättchen 1, am Lichtmodulator 2 und am zweiten Phasenplättchen 2 dargestellt, obwohl diese Situationen nicht gleichzeitig, sondern mit der Frequenz der Wechselspannung Uo (Fig. 1) alternierend eintreten.

Zunächst wird in Analogie zu Fig. 2a der Fall betrachtet, daß die elektrischen Felder -E1 bzw. -E2 bzw. -E3 am ersten Phasenplättchen 1 bzw. am ersten Lichtmodulator 2 bzw. am zweiten Phasenplättchen 3 anliegen. Der Lichtstrahl 10b schwacher Intensität passiert den Polarisator P2, der davon nur die Komponente mit der Eingangs-Polarisationsrichtung EPR1 durchläßt. Dieses Licht trifft auf das erste Phasenplättchen, das eine erste Indikatrix besitzt, die ebenso wie in der Situation von Fig. 2a in der um den zweiten Winkel -α gegen die erste Ruhelagen-Richtung R1 verdrehten zweiten Auslenkungsrichtung B verläuft, da das Feld -E1 anliegt und der zweite Winkel -α von der Lichtintensität unabhängig ist. Beim Durchgang durch das erste Phasenplättchen 1 erfolgt daher keine Änderung der Polarisationsrichtung.

Die Indikatrix des ersten Lichtmodulators 2, d.h. die zweite Indikatrix, ist hingegen am Ort des Lichteinfalls nur um einen kleinen Winkel -β aus der zweiten Ruhelagen-Richtung R2 ausgelenkt und verläuft in einer vierten Auslenkungsrichtung D, welche im Gegensatz zur Situation von Fig. 2a nicht parallel zur EPR1-Richtung ist, sondern vielmehr sich nur wenig von der zweiten Ruhelagen-Richtung R2 unterscheidet, da zwar das Feld -E2 anliegt, aber der Betrag des Winkels β intensitätsabhängig ist und der Lichtstrahl 10h von geringer Intensität ist. Die Polarisationsrichtung dreht sich daher beim Durchgang des schwachen Lichtstrahls durch den ersten Lichtmodulator 3 um das Doppelte der Winkeldifferenz βmax - β. Für sehr starke Lichtintensität geht der Betrag von β gegen βmax, so daß in diesem Fall die Winkeldifferenz βmax - β gegen Null geht und keine Drehung der Polarisationsrichtung erfolgt, was der Situation von Fig. 2a entspricht. Für sehr schwache Lichtintensität hingegen geht der Betrag von β gegen Null, so daß in diesem Fall eine Drehung der Polarisationsrichtung um den Winkel 2βmax erfolgt.

Die dritte Indikatrix, zweites Phasenplättchen 3, verläuft parallel zur ersten Indikatrix, also in FPR1-Richtung, da das Feld -E3 anliegt. Der Lichtstrahl trifft daher mit einer Polarisationsrichtung, welche um den Winkel 2•(βmax - β) gegen die EPR1-Richtung gedreht ist, auf das zweite Phasenplättchen 3. Diese geht durch Spiegelung an der dritten Indikatrix in eine Polarisationsrichtung über, welche um den Winkel -2•(βmax - β) gegen die EPR1-Richtung gedreht ist, was einer Drehung um den Winkel -4•(βmax - β) entspricht.

Für sehr schwache Lichtintensität geht der Winkel -2•(βmax - β) gegen den Wert -2βmax. Für den besonders günstigen Spezialfall βmax = 45° verläßt ein sehr schwacher Lichtstrahl das zweite Phasenplättchen um -90° gegen die EPR1-Richtung gedreht und kann daher den Analysator P2 ohne Abschwächung passieren.

Nun wird unter weiterer Bezugnahme auf Fig. 3 in Analogie zur Situation von Fig. 2b der Fall betrachtet, daß die elektrischen Felder +E1 bzw. +E2 bzw. +E3 am ersten Phasenplättchen 1 bzw. am ersten Lichtmodulator 2 bzw. am zweiten Phasenplättchen 3 anliegen. Licht mit der Eingangs-Polarisationsrichtung EPR1 trifft auf das erste Phasenplättchen, dessen Indikatrix in der um den ersten Winkel +α gegen die erste Ruhelagen-Richtung R1 und somit um den Winkel +2α gegen die EPR1-Richtung verdrehten ersten Auslenkungsrichtung A verläuft. Beim Durchgang durch das erste Phasenplättchen 1 - Spiegelung der Eingangs-Polarisationsrichtung EPR1 an der ersten Auslenkungsrichtung A - erfolgt daher eine Drehung der Polarisationsrichtung um den Winkel 4α, so daß die Polarisationsrichtung nach Passieren des ersten Phasenplättchens um den Winkel 4α gegen die EPR1-Richtung gedreht ist.

Die Indikatrix des ersten Lichtmodulators 2, d.h. die zweite Indikatrix, ist am Ort des Lichteinfalls um einen kleinen Winkel +β aus der zweiten Ruhelagen-Richtung R2 ausgelenkt, da zwar das Feld +E2 anliegt, aber der Lichtstrahl 10b von geringer Intensität ist. Die zweite Indikatrix verläuft daher am Lichteinfallsort in einer dritten Auslenkungsrichtung C, welche sich um den Winkel +β von der zweiten Ruhelagen-Richtung R2 und somit wegen Bedingung (b) um den Winkel βmax+β von der EPR1-Richtung unterscheidet. Ferner ist gemäß Bedingung (a) für n=0, T=0 der Winkel βmax = 2α, so daß βmax+β = 2α+β.

Der Winkelunterschied zwischen der Polarisationsrichtung des auf den ersten Lichtmodulator 2 einfallenden Lichtstrahls und der dritten Auslenkungsrichtung C beträgt daher 2α+β - 4α = -2α+β. Daher erfährt die Polarisationsrichtung des Lichtstrahls beim Durchgang durch den Lichtmodulator 2. d.h. bei Spiegelung an der dritten Auslenkungsrichtung C, eine Drehung um den Winkel -4α+2β.

Die Polarisationsrichtung des Lichtstrahls ist beim Auftreffen auf das zweite Phasenplättchen 3 um den Winkel +2β gegen die EPR1-Richtung gedreht. Die dritte Indikatrix verläuft in der ersten Auslenkungsrichtung A, da am zweiten Phasenplättchen 3 das äußere elektrische Feld +E3 anliegt. Der Winkelunterschied zur Polarisationsrichtung des auf das zweite Phasenplättchen 3 auftreffenden Lichtstrahls beträgt daher +2α-2β. Somit erfolgt eine Drehung der Polarisationsrichtung - Spiegelung an der dritten Indikatrix - um den Winkel +4α-4β, so daß der Lichtstrahl das zweite Phasenplättchen mit einer Polarisationsrichtung verläßt, welche um den Winkel +4α-2β gegen die EPR1-Richtung gedreht ist.

Für sehr kleine Lichtintensitäten geht der Winkel β gegen Null. Ferner gilt wegen Bedingung (a) bei n=0, T=0, also für die hier erläuterte Ausführungsform der Erfindung, daß βmax = 2α ist. Für den besonders günstigen Spezialfall βmax = 45° verläßt ein sehr schwacher Lichtstrahl das zweite Phasenplättchen um 90° gegen die EPR1-Richtung gedreht und kann daher den Analysator P2 ohne Abschwächung passieren.

Aber auch für den Fall, daß sich ein so großer Maximalwert von βmax = 45° mit den zum Einsatz kommenden Flüssigkristallen nicht erreichen läßt, kann die Erfindung angewendet werden; in diesem Fall wird lediglich die maximal mögliche Transmission verringert, so daß auch schwache Lichtstrahlen merklich abgeschwächt werden. Da intensive Lichstrahlen jedoch vollständig ausgefiltert werden, bleibt die Anwendbarkeit der Erfindung auch in diesem Fall erhalten. Die Erfindung weist somit den großen Vorteil auf, die Verwendung auch solcher Flüssigkristalle im Lichtmodulator zu ermöglichen, mit welchen sich nur ein Maximalwert βmax von weit unter 45° erreichen läßt. Für βmax = 30° z.B. wird immer noch eine maximale Transmission von 50% erreicht.

Erfindungsgemäß ist es Folge der Einhaltung der Bedingungen (a) und (b), daß die Anordnung von Fig. 3 einen sehr schwachen Lichtstrahl 10b von unabhängig von der momentanen Polarität der Wechselspannung Uo stets passieren läßt.

Auch dann, wenn der Winkel β größer ist als Null, kann der Lichtstrahl den Analysator passieren, wobei allerdings die Transmission mit zunehmendem. Betrag des Winkels β, d.h. bei Erhöhung der Lichtintensität, abnimmt und z.B. bei β=45° den Wert Null erreicht und somit in die Situation von Fig. 2a bzw. 2b, vollständige Blockierung, übergeht.

Bei Umpolung der Felder gehen die Indikatrices von einer Auslenkungsrichtung über in eine andere. In der Übergangszeit sind die Bedingungen (a) oder (b) oder beide nicht erfüllt, so daß die erfindungsgemäße lichtabschwächende Wirkung nicht erfolgen kann. Kurze Übergangszeiten bzw. kurze Ansprechzeit der Indikatrix auf Lichtwechsel sind daher vorteilhft.

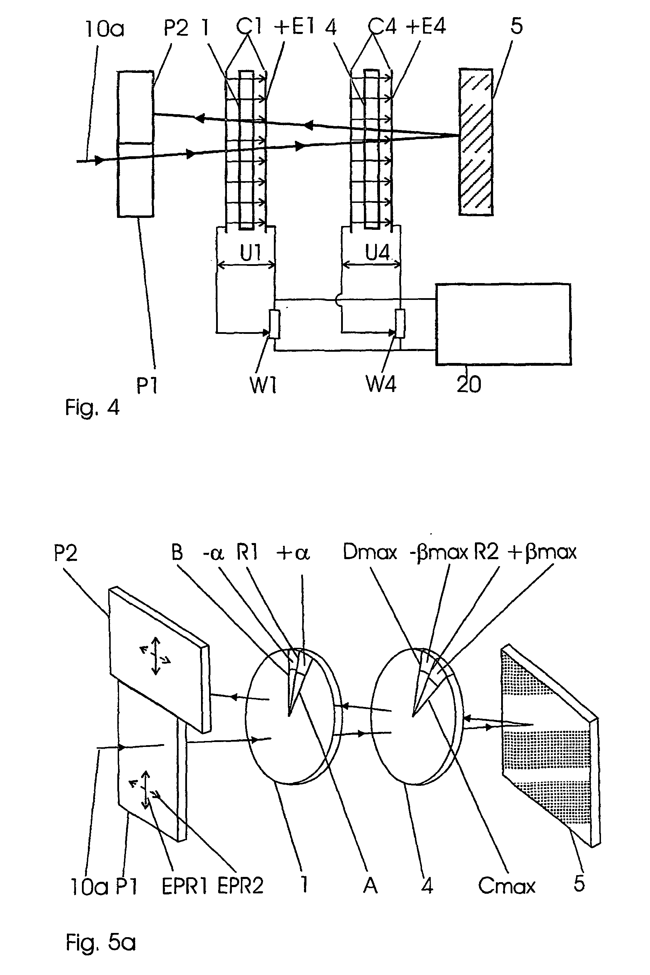

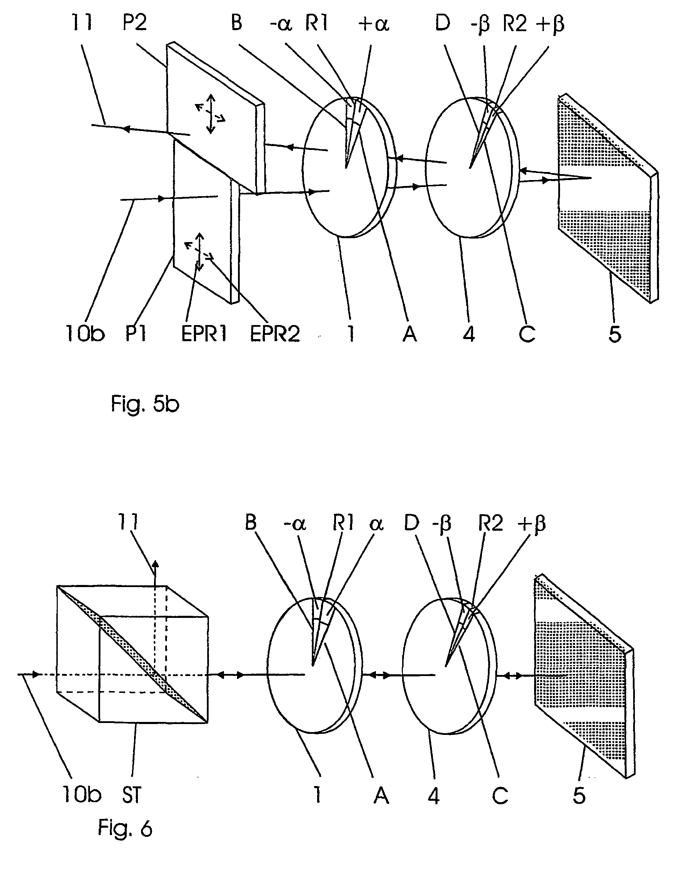

Nun wird auf die Fig. 4, 5a und 5b Bezug genommen, welche schematisch eine andere Ausführungsform der Erfindung zeigen. Ein Lichtstrahl 10a hoher Intensität (Fig. 4, 5a) bzw. ein Lichtstrahl 10b geringer Intensität (Fig. 4b) fällt auf den Polarisator P1 ein. Die von diesem durchgelassene Lichtkomponente durchläuft ein erstes λ/2-Phasenplättchen 1 und einen als λ/4-Phasenplättchen ausgebildeten zweiten optisch adressierbaren ortsauflösenden Lichtmodulator 4 und trifft anschließend auf einen Spiegel 5, von wo der Lichtstrahl in umgekehrter Reihenfolge nochmals den zweiten Lichtmodulator und danach das erste Phasenplättchen 1 durchläuft und dann auf den zum Polarisator P1 gekreuzten Analysator P2 trifft, der in dieser Ausführungsform der Erfindung neben dem Polarisator P1 angeordnet ist. Die Einfallsrichtung des Lichtstrahl auf den Spiegel 5 steht, um den Durchgang sowohl durch den Polarisator P1 als auch durch den Analysator P2 geometrisch zu ermöglichen, nicht senkrecht auf dem Spiegel 5; die Abweichung zwischen der Einfallsrichtung des Lichtstrahl vom Lot auf den Spiegel 5 ist jedoch so geringfügig gewählt, daß die dadurch geometrisch bedingte Zunahme der optischen Weglängen im ersten Phasenplättchen 1 und im zweiten Lichtmodulator 4 vernachlässigbar ist.

Das erste λ/2-Phasenplättchen 1 und der Lichtmodulator 4 sind zwischen den Platten je eines Plattenkondensators C1, C4 angeordnet (Fig. 4), deren Platten durch lichtdurchlässige elektrisch leitende Schichten gebildet sind. In den Plattenkondensatoren C1, C4 entsteht durch Anlegen von Spannungen U1, U4, welche durch Potentiometer W1, W4 einstellbar sind, jeweils ein elektrisches Feld. Die Spannungsquelle 20 gibt eine Wechselspannung Uo mit vorzugsweise einem im wesentlichen rechteckförmigen zeitlichen Verlauf ab, so daß die Spannungen U1, U4 und damit auch die elektrischen Felder in den Plattenkondensatoren C1, C4 ständig umgepolt werden.

Die Potentiometer W1 W4 sind so eingestellt, daß der Lichtmodulator 4 im Plattenkondensator C4 bzw. das erste λ/2-Phasenplättchen 1 im Plattenkondensator C1 sich jeweils abwechselnd in einem siebten und einem diesem entgegensetzt gleichen achten äußeren elektrischen Feld +E4, -E4 bzw. in einem ersten und einem diesem entgegensetzt gleichen zweiten äußeren elektrischen Feld +E1, -E1 befinden. Die elektrischen Felder +E1, +E4 werden durch die Wechselspannung U1, U4 zyklisch und zugleich in die jeweils entgegengesetzt gleichen elektrischen Felder -E1, -E4 umgepolt, und umgekehrt. In den Fig. 4 und 5a ist die Situation zu einem Zeitpunkt dargestellt, in welchem sich das erste λ/2-Phasenplättchen 1 im Feld -E1 und der zweite Lichtmodulator 4 im Feld -E4 befindet.

Die Feldstärken -E1, +E1, -E4 und +E4 sind so gewählt und der Polarisator P1, das erste Phasenplättchen 1 und der zweite Lichtmodulator 4 sind erfindungsgemäß so angeordnet, daß die Bedingungen (a) und (b) erfüllt sind.

Der zweite Lichtmodulator 4 besitzt eine vierte Indikatrix, welche ohne äußeres elektrisches Feld in einer zweiten Ruhelagen-Richtung R2 verläuft und durch das siebte bzw. achte äußere elektrische Feld +E4, -E4 aus der zweiten Ruhelagen-Richtung R2 heraus in eine dritte bzw. vierte Auslenkungsrichtung C bzw. D gedreht wird, welche gegenüber der zweiten Ruhelagen-Richtung R2 um einen dritten bzw. einen diesem entgegengesetzt gleichen vierten Winkel +β, -β um die Richtung des elektrischen Feldes +E2 bzw. -E2 gedreht sind. Der Betrag des dritten bzw. vierten Winkels +β bzw. -β nimmt mit zunehmender Lichtintentsität bis zu einem bestimmten Maximalwert βmax, nicht jedoch über diesen hinaus zu, so daß die dritte bzw. vierte Auslenkungsrichtung C bzw. D eine erste bzw. zweite Grenz-Auslenkungsrichtung Cmax, Dmax erreichen, falls der Betrag des dritten bzw. vierten Winkels +β bzw. -β den Maximalwert βmax erreicht.

Nun wird auf die Fig. 5a und 5b Bezug genommen, welche schematische perspektivische Darstellungen der Vorrichtung von Fig. 5 zeigen, wobei die Plattenkondensatoren und ihre elektrische Beschaltung aus Gründen der Übersichtlichkeit weggelassen sind. In den Fig. 5a und 5b ist jeweils aus Gründen der Anschaulichkeit gleichzeitig die Situation bei Anliegen der elektrischen Felder +E1, +E4 und bei Anliegen der umgepolten Felder -E1, - E4 am ersten Phasenplättchen 1 und am zweiten Lichtmodulator 4 dargestellt, obwohl diese Situationen nicht gleichzeitig, sondern mit der Frequenz der Wechselspannung Uo (Fig. 5) alternierend eintreten.

In Fig. 5a fällt der Lichtstrahl 10a von hoher Intensität auf den Polarisator P1 ein. Dieser ist so orientiert, daß er nur eine Lichtkomponente mit einer ersten Eingangs-Polarisationsrichtung EPR1 passieren läßt. Diese Lichtkomponente durchläuft das erste λ/2-Phasenplättchen 1, wobei je nach Polarität der Wechselspannung U1 (Fig. 1) entweder keine Änderung der Polarisationsrichtung oder eine solche um einen Winkel +4α erfolgt, wie bereits unter Bezug auf Fig. 2a und 2b erläutert wurde.

Danach durchläuft das Licht den zweiten Lichtmodulator 4, der im Gegensatz zu dem ersten Lichtmodulator 2 von Fig. 1, 2b, 2b nicht als λ/2-Phasenplättchen, sondern als λ/4-Phasenplättchen ausgebildet ist. Nach Reflexion am Spiegel 5, welche mit einem Phasensprung von 180° einhergeht, durchläuft das Licht den zweiten Lichtmodulator 4 in umgekehrter Richtung erneut. Insgesamt wirkt der zweite Lichtmodulator 4 daher auf die Polarisationsrichtung des Lichtstrahls ebenso wie ein λ/2-Phasenplättchen. Aufgrund der hohen Intensität des Lichtstrahls 10a verläuft vierte Indikatrix je nach Polarität der Wechselspannung U4 (Fig. 4) in der ersten oder zweiten Grenz-Auslenkungsrichtung Cmax oder Dmax, so daß beim zweimaligen Durchgang durch den zweiten Lichtmodulator 2 in keinem Fall eine Änderung der Polarisationsrichtung des Lichtstrahls hoher Intensität erfolgt.

Anschließend durchläuft das Licht das erste Phasenplättchen 1 in umgekehrter Richtung erneut. Das erste Phasenplättchen 1 erfüllt somit zugleich die Funktion des zweiten Phasenplättchens 2 von Fig. 1, 2a, 2b. Hierbei erfolgt in Analogie zu Fig. 2a bzw. 2b je nach Polarität der Wechselspannung U1 entweder keine Änderung der Polarisationsrichtung bzw. eine solche um einen Winkel -4α zurück in die EPR1-Richtung, so daß Licht hoher Intensität erfindungsgemäß in beiden Fällen am Analysator 2 ausgefiltert wird.

In Fig. 5b fällt der Lichtstrahl 10b von geringer Intensität ein. Da der zweite Lichtmodulator 4 auf die Polarisationsrichtung des Lichtstrahls insgesamt ebenso wie ein λ/2-Phasenplättchen wirkt, wird erfindungsgemäß in völliger Analogie zu der Situation von Fig. 3 erreicht, daß die Anordnung von Fig. 5b einen sehr schwachen Lichtstrahl 10b unabhängig von der momentanen Polarität der Wechselspannung Uo stets passieren läßt, wobei die Transmission mit zunehmendem Betrag des Winkels β, d.h. bei Erhöhung der Lichtintensität, abnimmt und bei β=45° den Wert Null erreicht.

Nun wird auf Fig. 6 Bezug genommen, welche eine schematische Darstellung einer weiteren Ausführungsform einer erfindungsgemäßen Vorrichtung zeigt, wobei die elektrische Beschaltung weggelassen ist. Der einzige Unterschied dieser Ausführungsform zu derjenigen von Fig. 4, 5a, 5b besteht darin, daß der Polarisator P1 und der Analysator P2 von Fig. 4, 5a, 5b nun gemeinsam durch einen ersten polarisierenden Strahlenteiler ST1 gebildet sind. Die Bedingungen (a) und (b) sind erfindungsgemäß weiterhin erfüllt. Von links fällt ein Lichtstrahl geringer Intensität in den polarisierenden Strahlenteiler ST1 ein und wird zum Teil geradeaus durchgelassen, zum Teil (nicht gezeigt) nach unten reflektiert. Der geradeaus durchgelassene Teil weist die Eingangs-Polarisationsrichtung EPR1 auf. Der am Spiegel 5 reflektierte Strahl fällt von rechts in den polarisierenden Strahlenteiler ST1 ein und zum Teil durchgelassen (nicht gezeigt), zum Teil als ausfallender Strahl 11 nach oben reflektiert, für welchen der Strahlenteiler zugleich als gekreuzt zur EPR1-Richtung stehender Analysator wirkt.

Der polarisierende Strahlenteiler ST1 fungiert somit für einfallendes Licht als Polarisator und zugleich für am Spiegel 5 reflektiertes Licht als zum Polarisator gekreuzter Analysator. Diese Ausführungsform hat gegenüber derjenigen von Fig. 4, 5a, 5b den Vorteil, daß die Einfallsrichtung des Lichtstrahls auf den Spiegel 5 senkrecht stehen kann.

Analog zu den Erläuterungen zu Fig. 1-6 kann leicht gezeigt werden, daß mit den Anordnungen von Fig. 1-6 auch für eine zur ersten Eingangs-Polarisationsrichtung EPR1 senkrecht stehende zweite Eingangs-Polarisationsrichtung EPR2 - herstellbar z.B. durch Drehen des Polarisators um 90° - die erfindungsgemäße Wirkung, nämlich vollständige Blockierung der des Lichtdurchgangs für hohe Lichtintensität und Transmission für geringe Lichtintensität, erreicht wird, wobei in diesem Fall auch der Analysator P2 um 90° gedreht werden muß - in den Fig. 2a, 2b, 3, 5a und 5b jeweils gekennzeichnet durch einen vertikalen gestrichelten Doppelpfeil - damit die Voraussetzung eines zum Polarisator P1 gekreuzt stehenden Analysators P2 erhalten bleibt.

Ferner kann leicht gezeigt werden, daß die erfindungsgemäße Wirkung der Vorrichtungen von Fig. 1-6 auch dann erreicht wird, wenn der Wert für n in Bedingung (a) nicht Null ist, sondern 1, 2, 3,..., also eine beliebige natürliche Zahl.

Ferner kann leicht gezeigt werden, daß die erfindungsgemäße Wirkung der Vorrichtungen von Fig. 1-6 auch dann erreicht wird, wenn in Bedingung (b) nicht die zweite Auslenkungsrichtung B und die zweite Grenz-Auslenkungsrichtung Dmax stehen beide entweder parallel oder senkrecht zur Eingangs-Polarisationsrichtung EPR1 stehen, wie unter Bezug auf Fig. 1-6 willkürlich angenommen wurde, sondern die Alternative realisiert ist, daß die erste Auslenkungsrichtung A und die erste Grenz-Auslenkungsrichtung Cmax beide parallel oder senkrecht zur Eingangs-Polarisationsrichtung EPR1 stehen.

Unter Ausnutzung der Toleranz T = ±5° in Bedingung (a) läßt sich bei Bedarf erreichen, daß die Blockierung für den Fall β=45° nicht vollständig ist, sondern ein bestimmter Bruchteil des Lichtstrahls 10a transmittiert.

Eine erfindungsgemäße Vorrichtung kann nicht nur dazu dienen, die integrale Lichtintensität bei starker Einstrahlung zu verhindern. Vielmehr kann die Erfindung auch dazu dienen, zonal in die Vorrichtung einfallendes Licht einer intensiven gerichteten Lichtquelle auszufiltern oder abzuschwächen, während ein dunklerer Hintergrund weniger oder nicht abgeschwächt wird. Die Erfindung kann somit z.B. als Filter zum Schutz des Auges vor einem Laserstahl dienen, während der Hintergrund durch das Filter weiterhin betrachtbar bleibt.

Die Vorrichtungen von Fig. 1-6 können bevorzugt mit einem Objektiv ausgestattet werden, welches ein Sehfeld auf den ersten bzw. zweiten Lichtmodulator 2, 4 abbildet, und mit einem Okular, welches so angeordnet ist, daß das Bild des Sehfeldes mittels des Okulars betrachtbar ist. Objektiv und Okular wirken dann zusammen mit den Vorrichtungen von Fig. 1-6 als Teleskop, welches erfindungsgemäß intensiv leuchtende Zonen des Sehfelds abdunkelt, während die übrigen Zonen nicht oder nur wenig abgedunkelt werden. Wird ein solches Teleskop auf eine intensive Lichtquelle vor einem dunkleren Hintergrund gerichtet, z.B. auf die von blauem Himmel umgebene Sonne, so wird das sehr intensive Licht der Sonne wesentlich abgedunkelt oder völlig ausgefiltert, während zugleich der Hintergrund bei fast voller Transmission betrachtet werden kann. Selbstverständlich kann es notwendig sein, Maßnahmen gegen eine zu starke lokale oder integrale Aufheizung insbesondere des Lichtmodulators zu treffen.

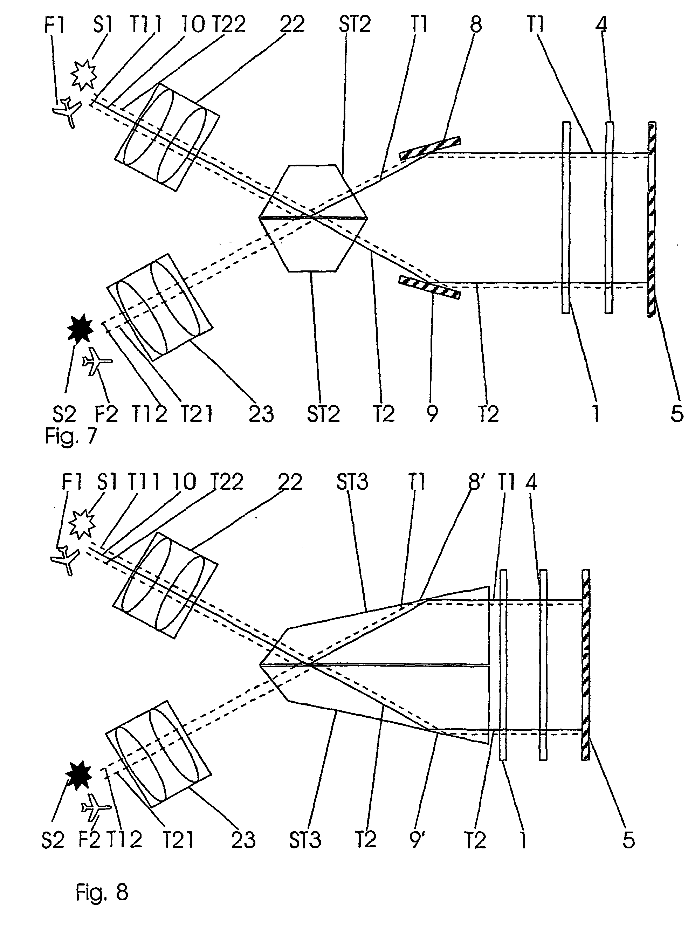

Nun wird auf Fig. 7 Bezug genommen, welche eine Querschnittdarstellung einer bevorzugten Ausführungsform der Erfindung zeigt, in welcher vorteilhaft die Notwendigkeit entfällt, beim Lichteinfall in die Vorrichtung eine Polarisationsrichtung auszufiltern. Die Vorrichtung von Fig. 7 umfaßt das erste λ/2-Phasenplättchen 1, den als λ/4-Phasenplättchen ausgebildeten zweiten optisch adressierbaren ortsauflösenden Lichtmodulator 4 und den Spiegel 5 von Fig. 4, sowie ferner ein Objektiv 22, ein Okular 23, zwei Lichtablenkflächen 8, 9, die z.B. Spiegel oder verspiegelte Prismen sein können, und einen zweiten polarisierenden Strahlenteiler ST2, der für einfallendes Licht 10 als Polarisator und zugleich für am Spiegel 5 reflektiertes Licht als zum Polarisator gekreuzter Analysator fungiert.

Ebenso wie in Fig. 4 befinden sich das erste λ/2-Phasenplättchen 1 bzw. der Lichtmodulator 4 im Inneren der Plattenkondensatoren C1 bzw. C4 in elektrischen Feldern, welche synchron zyklisch von +E1 nach -E1 bzw. von +E4 nach -E4 und umgekehrt umgepolt werden, wobei die elektrische Beschaltung nicht gezeigt ist. Der polarisierende Strahlenteiler ST2, das erste Phasenplättchen 1 und der Lichtmodulator sind erfindungsgemäß so angeordnet, daß die Bedingungen (a) und (b) erfüllt sind.

Das Objektiv 22 bildet ein Sehfeld auf den zweiten Lichtmodulator 4 ab. Das Bild des Sehfeldes ist mit Hilfe des Okulars 23 betrachtbar. Aus dem Sehfeld fällt z.B. unpolarisiertes Licht 10 in die Vorrichtung ein. Dieses Licht wird im zweiten polarisierenden Strahlenteiler ST2 in zwei Teilstrahlen T1, T2 zerlegt, welche senkrecht zueinander linear polarisiert sind, wobei der erste Teilstrahl T1 abgelenkt und der zweite Teilstrahl T2 nicht abgelenkt wird. Z.B. kann der erste Teilstrahl T1 senkrecht zur Papierebene von Fig. 6 und der zweite Teilstrahl T2 parallel zu derselben polarisiert sein. Der erste und der zweite Teilstrahl T1, T2 werden durch je eine der Lichtablenkflächen 8, 9 so abgelenkt, daß sie getrennt voneinander jeweils durch das erste λ/2-Phasenplättchen 1 und den zweiten Lichtmodulator 4 durchlaufen und auf den Spiegel 5 treffen und von dort in umgekehrter Reihenfolge erneut den zweiten Lichtmodulator 4 und das erste λ/2-Phasenplättchen 1 durchlaufen und über die Lichtablenkflächen 8, 9 zurück in den polarisierenden Strahlenteiler ST2 gelangen.

Dort wird der erste Teilstrahl T1 zerlegt wird in einen dritten Teilstrahl T11, welcher parallel zum ersten Teilstrahl T1 linear polarisiert ist und im polarisierenden Strahlenteiler ST2 in Richtung des Objektivs 23 abgelenkt wird, und in einen zum ersten Teilstrahl T1 senkrecht linear polarisierten vierten Teilstrahl T12, welcher im polarisierenden Strahlenteiler ST2 nicht abgelenkt wird.

Der zweite Teilstrahl T2 wird nach Reflexion am Spiegel 5 und erneutem Eintritt in den Strahlenteiler ST2 zerlegt in einen fünften Teilstrahl T21, welcher senkrecht zum zweiten Teilstrahl T2 linear polarisiert ist und im polarisierenden Strahlenteiler ST2 in die Richtung des vierten Teilstrahls T12 abgelenkt wird, und in einen zum zweiten Teilstrahl T2 parallel linear polarisierten sechsten Teilstrahl T22, welcher im polarisierenden Strahlenteiler ST nicht abgelenkt wird.

Der zweite Lichtmodulator 4 befindet sich in der Brennebene des Objektivs 22. Da das einfallende Licht 10 in zwei unabhängige, senkrecht zueinander polarisierte Teile T1, T2 zerlegt wird, entstehen auf dem Lichtmodulator 4 zwei voneinander beabstandete Bilder des Sehfeldes. Das Okular 23 ist so angeordnet, daß der vierte und der fünfte Teilstrahl T12, T21 in das Okular 23 gelangen, so daß beide Bilder des Sehfeldes durch das Okular 23 betrachtet werden können, wobei die Polarisationsinformation des Sehfeldes vollständig in den Teilstrahlen T12, T21 enthalten ist. Der polarisierende Strahlenteiler ST2 ist vorzugsweise so geformt und angeordnet, daß der Weg des vierten Teilstrahls T12 mit dem Weg des fünften Teilstrahls T21 zusammenfällt, so daß für einen Beobachter beide Bilder des Sehfeldes deckungsgleich zusammenfallen.

Die Intensität der beiden Teilstrahlen T12, T21 geht erfindungsgemäß gegen Null, falls die Intensität des einfallenden Lichts 10 sehr groß ist. Die Vorrichtung von Fig. 7 wirkt demnach als Teleskop, welches vorteilhaft zugleich sowohl auf die senkrecht zur Papierebene polarisierte als auch auf die parallel zur Papierebene polarisierte Komponente des einfallenden Lichts 10 so wirkt, daß nur stark leuchtende Zonen des Sehfelds abgedunkelt werden, während die übrigen Zonen nicht oder nur wenig abgedunkelt werden. Vorteilhafterweise erfolgt selbst bei Betrachtung sehr intensiver Lichtquellen nur eine geringe Wärmebelastung des Strahlenteilers ST2, da dieser auch das am Spiegel 5 reflektierte Licht lediglich in die Teilstrahlen T11 und T12 bzw. T21 und T22 zerlegt, wobei die Teilstrahlen T11 und T22, welche bei hoher Intensität des einfallenden Lichts 10 ihrerseits hohe Intensität aufweisen, die Vorrichtung durch das Objektiv nach außen verlassen und somit wesentlich zur Abfuhr von Energie aus der Vorrichtung beitragen.

Diese erfindungsgemäße Wirkung ist in Fig. 7 veranschaulicht durch zwei Objekte S1, F1 des Sehfeldes, wobei S1 sehr intensives und F1 wenig intensives Licht aussendet. S1 kann z.B. die Sonne und F1 ein Flugzeug sein. Der Betrachter, z.B. der Pilot eines anderen Flugzeuges, der das Flugzeug F1 im Gegenlicht der Sonne beobachten möchte, sieht im Okular 23 das Bild F2 des Flugzeugs F1 nur wenig abgedunkelt, während er das Bild S2 der Sonne S1 vorteilhafterweise sehr stark abgedunkelt sieht, so daß für ihn die Beobachtung des Flugzeugs F1 wesentlich erleichtert ist oder sogar erst mit Hilfe der erfindungsgemäßen Vorrichtung möglich wird.

Fig. 8 zeigt eine Abwandlung der Vorrichtung von Fig. 7, bei welcher anstelle des zweiten polarisierenden Strahlenteilers ST2 von Fig. 7 ein dritter polarisierender Strahlenteiler ST3 zum Einsatz kommt, welcher so geformt ist, daß zwei seiner Begrenzungsflächen als lichtablenkende Flächen 8', 9' fungieren, welche den ersten und den zweiten Teilstrahl T1, T2 in Richtung des Spiegels 5 und nach deren Reflexion am Spiegel 5 zurück in den Strahlenteiler ST3 ablenken. Die lichtablenkenden Flächen 8', 9' sind vorzugsweise außenverspiegelt.

Die Teilstrahlen T11, T22 und T21, T22 sind in Fig. 7 und 8 lediglich aus Gründen der Anschaulichkeit versetzt zueinander eingezeichnet.

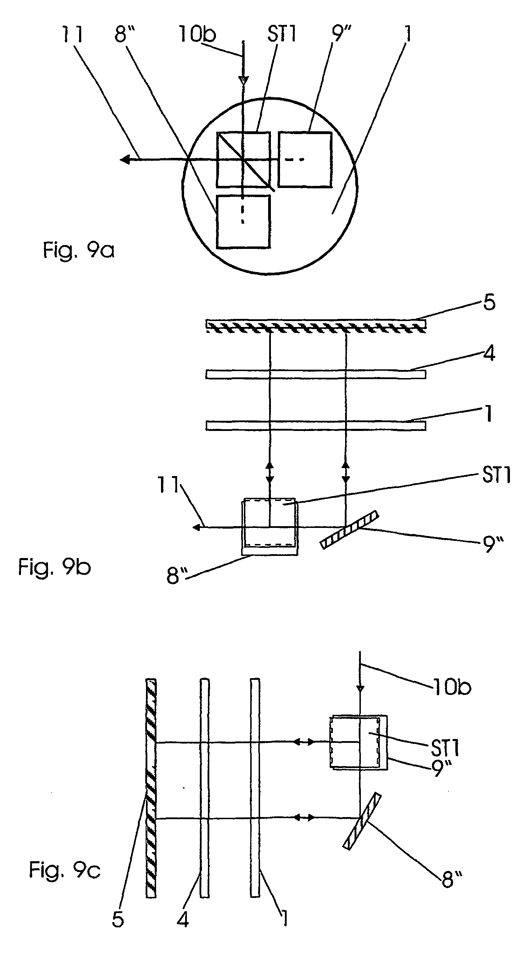

Fig. 9a zeigt eine weitere Ausführungsform einer erfindungsgemäßen Vorrichtung, betrachtet in einer Richtung quer zum einfallenden Lichtstrahl 10b und quer zum ausfallenden Lichtstrahl 11, wobei die elektrische Beschaltung weggelassen ist. Fig. 9b zeigt die Vorrichtung von Fig. 9a, betrachtet in Richtung des einfallenden Lichtstrahls 10b, und Fig. 9c zeigt die diese Vorrichtung, betrachtet gegen die Richtung des ausfallenden Lichtstrahls 11.

Der polarisierende Strahlenteiler ST1 zerlegt das einfallende Licht 10b in zwei senkrecht zueinander linear polarisierte Teilstrahlen. Diese verlassen den Strahlenteiler ST1 in Fig. 9a nach rechts bzw. unten und treffen jeweils auf eine Lichtablenkfläche 8", 9", welche jeweils um 45° gegen die Ausbreitungsrichtung des betreffenden Teilstrahls geneigt sind um die Teilstrahlen in Richtung des Phasenplättchens 1 ablenken. Die gegenseitige Anordnung des Phasenplättchens, des Lichtmodulators 4 und des Spiegels die Anordnung der Plattenkondensatoren C1, C4 und deren elektrische Beschaltung entspricht derjenigen von Fig. 7. Der Unterschied zur Anordnung von Fig. 7 besteht lediglich darin, daß die lichtablenkenden Flächen 8", 9" und der polarisierende Strahlenteiler ST1 von Fig. 9a, b, c anders angeordnet sind als die lichtablenkenden Flächen 8, 9 und der polarisierende Strahlenteiler ST2 von Fig. 7.

### Gewerbliche Anwendbarkeit:

Die Erfindung ist gewerblich anwendbar z.B. im Bereich der Arbeitssicherheit, der Schweißtechnik, der Flugsicherheit, der Pyrotechnik und der Medizintechnik.

### Liste der Bezugszeichen:

- 1, 3: erstes, zweites λ/2-Phasenplättchen
- 2,4: erster, zweiter optisch adressierbarer ortsauflösender Lichtmodulator
- 5: Spiegel
- 8, 8', 9, 9': lichtablenkende Flächen
- 10: einfallendes Licht
- 10a, 10b: einfallendes Licht hoher, geringer Intensität
- 11: ausfallendes Licht
- 20: Spannungsquelle
- A, B, C, D: erste, zweite, dritte, vierte Auslenkungsrichtung
- Cmax, Dmax: erste, zweite Grenz-Auslenkungsrichtung
- C1, C2, C3, C4: erster, zweiter, dritter, vierter Plattenkondensator
- +E1, -E1: erstes, zweites äußeres elektrisches Feld
- +E2, -E2: drittes, viertes äußeres elektrisches Feld
- +E3, -E3: fünftes, sechstes äußeres elektrisches Feld
- +E4, -E4: siebtes, achtes äußeres elektrisches Feld
- EPR1, EPR2: erste, zweite Eingangs-Polarisationsrichtung
- P1: Polarisator
- P2: Analysator
- R1, R2: erste, zweite Ruhelagen-Richtung
- ST1, ST2, ST3: erster, zweiter, dritter polarisierender Strahlenteiler
- T1, T2: erster, zweiter Teilstrahl
- T11,T12,T21,T22: dritter, vierter, fünfter, sechster Teilstrahl
- U0: Wechselspannung aus 20
- U1, U2 U3, U4: erste, zweite, dritte, vierte Wechselspannung
- W1, W2, W3, W4: erstes, zweites, drittes, viertes Potentiometer
- +α, -α: erster, zweiter Winkel
- +β, -β: dritter, vierter Winkel
- βmax: Maximalwert des Betrages von +β, -β

## Patentansprüche

1. Intensitätsabhängige Abschwächvorrichtung für Licht, mit einem Polarisator (P1), welcher in einer Eingangs-Polarisationsrichtung (EPR1, EPR2) linear polarisiertes Licht passieren läßt, und einem zu diesem im wesentlichen oder um 90° gekreuzten Analysator (P2), **gekennzeichnet durch** ein erstes und ein zweites λ/2-Phasenplättchen (1, 3) und einen als λ/2-Phasenplättchen ausgebildeten ersten optisch adressierbaren ortsauflösenden Lichtmodulator (2), wobei einfallendes Licht (10a, 10b) nacheinander den Polarisator (P1), das erste λ/2-Phasenplättchen (1), den ersten Lichtmodulator (3) und das zweite λ/2-Phasenplättchen (3) durchläuft und von dort auf den Analysator (P2) trifft, wobei
a) das erste λ/2-Phasenplättchen (1) eine erste Indikatrix besitzt, welche
- ohne äußeres elektrisches Feld in einer ersten Ruhelagen-Richtung (R1) verläuft,
- bei Anliegen eines ersten äußeren elektrischen Feldes (+E1) in einer ersten Auslenkungsrichtung (A) verläuft, die gegenüber der ersten Ruhelagen-Richtung (R1) um einen ersten, von der Lichtintensität unabhängigen Winkel (+α) um die Richtung des ersten äußeren elektrischen Feldes (+E1) gedreht ist, und
- bei Anliegen eines dem ersten äußeren elektrischen Feld (+E1) entgegengesetzt gleichen zweiten äußeren elektrischen Feldes (-E1) in einer zweiten Auslenkungsrichtung (B) verläuft, die gegenüber der ersten Ruhelagen-Richtung (R1) um einen zweiten Winkel (-α) gedreht ist, welcher dem ersten Winkel (+α) entgegengesetzt gleich ist,
b) der erste Lichtmodulator (2) eine zweite Indikatrix besitzt, welche ohne äußeres elektrisches Feld in einer zweiten Ruhelagen-Richtung (R2) verläuft,
- bei Anliegen eines dritten äußeren elektrischen Feldes (+E2) in einer dritten Auslenkungsrichtung (C) verläuft, welche gegenüber der zweiten Ruhelagen-Richtung (R2) um einen dritten Winkel (+β) um die Richtung des dritten äußeren elektrischen Feldes (+E2) gedreht ist,
- bei Anliegen eines dem dritten äußeren elektrischen Feld (+E2) entgegengesetzt gleichen vierten äußeren elektrischen Feldes (-E2) in einer vierten Auslenkungsrichtung (D) verläuft, welche gegenüber der zweiten Ruhelagen-Richtung (R2) um einen dem dritten Winkel (+β) entgegengesetzt gleichen vierten Winkel (-β) gedreht ist,
- wobei der Betrag des dritten und des vierten Winkels (+β, -β) mit zunehmender Lichtintentsität bis zu einem bestimmten Maximalwert (βmax), nicht jedoch über diesen hinaus zunimmt und die dritte bzw. vierte Auslenkungsrichtung (C, D) eine erste bzw. zweite Grenz-Auslenkungsrichtung (Cmax, Dmax) erreicht, falls der Betrag des dritten bzw. vierten Winkels (+β, -β) den Maximalwert (βmax) erreicht,
c) das zweite λ/2-Phasenplättchen (3) eine dritte Indikatrix besitzt, welche ohne äußeres elektrisches Feld in der ersten Ruhelagen-Richtung (R1) verläuft,
- bei Anliegen eines fünften äußeren elektrischen Feldes (+E3) in der ersten Auslenkungsrichtung (A) verläuft, und
- bei Anliegen eines sechsten, dem fünften äußeren elektrischen Feld (+E3) entgegengesetzt gleichen äußeren elektrischen Feldes (-E3) in der zweiten Auslenkungsrichtung (B) verläuft,
d) das erste und das zweite Phasenplättchen (1, 3) und der erste Lichtmodulator (2) so zueinander und gegenüber dem Polarisator (P1) ausgerichtet sind, daß
- die erste Auslenkungsrichtung (A) und die erste Grenz-Auslenkungsrichtung (Cmax) parallel zueinander und parallel oder senkrecht zur Eingangs-Polarisationsrichtung (EPR1, EPR2) verlaufen, oder
- die zweite Auslenkungsrichtung (B) und die zweite Grenz-Auslenkungsrichtung (Dmax) parallel zueinander und parallel oder senkrecht zur Eingangs-Polarisationsrichtung (EPR1, EPR2) verlaufen,
e) an das erste Phasenplättchen (1) das erste oder zweite äußere elektrische Feld (+E1, -E1), an den ersten Lichtmodulator (2) das dritte oder vierte äußere elektrische Feld (+E2, -E2) und an das zweite Phasenplättchen (3) das fünfte oder sechste äußere elektrische Feld (+E3, -E3) angelegt ist, und
f) das erste bzw. zweite, das dritte bzw. vierte und das fünfte bzw. sechste äußere elektrische Feld (+E1, E1, +E2, -E2, +E3, -E3) so gewählt sind, daß der erste Winkel (α) und der Maximalwert (βmax) die Bedingung 2α-βmax = n•45° + T erfüllen, wobei n=0,1,2,3,... und T eine Toleranz von ±5° ist.

2. Vorrichtung nach Anspruch 1, **dadurch gekennzeichnet,**
**daß** das erste und das zweite λ/2-Phasenplättchen (1, 3) und der erste Lichtmodulator (2) parallel zueinander angeordnet sind.

3. Vorrichtung nach Anspruch 1, **dadurch gekennzeichnet,**
**daß** das erste bzw. zweite äußere elektrische Feld (+E1, -E1) durch einen ersten Plattenkondensator (C1) erzeugt wird, zwischen dessen Platten sich das erste Phasenplättchen (1) befindet, das dritte bzw. vierte äußere elektrische Feld (+E2, -E2) durch einen zweiten Plattenkondensator (C2) erzeugt wird, zwischen dessen Platten sich der erste Lichtmodulator (2) befindet, und das fünfte bzw. sechste äußere elektrische Feld (+E3, -E3) durch einen dritten Plattenkondensator (C3) erzeugt wird, zwischen dessen Platten sich das zweite Phasenplättchen (3) befindet.

4. Vorrichtung nach Anspruch 3, **dadurch gekennzeichnet,**
**daß** an den Plattenkondensatoren (C1, C2, C3) je eine Wechselspannung (U1, U2, U3) mit im wesentlichen rechteckförmigem zeitlichen Verlauf anliegt, wobei die Nulldurchgänge aller Wechselspannungen (U1, U2, U3) jeweils gleichzeitig erfolgen.

5. Intensitätsabhängige Abschwächvorrichtung für Licht, mit einem Polarisator (P1, ST1, ST2), welcher in einer Eingangs-Polarisationsrichtung (EPR1, EPR2) linear polarisiertes Licht passieren läßt, und einem zu diesem im wesentlichen oder um 90° gekreuzten Analysator (P2, ST1, ST2, ST3), **gekennzeichnet durch**
ein erstes λ/2-Phasenplättchen (1), einen als λ/4-Phasenplättchen ausgebildeten zweiten optisch adressierbaren ortsauflösenden Lichtmodulator (4) und einen Spiegel (5), wobei einfallendes Licht (10a, 10b) nacheinander den Polarisator (P1, ST1, ST2, ST3), das erste λ/2-Phasenplättchen (1) und den zweiten Lichtmodulator (4) durchläuft, von dort auf den Spiegel (5) trifft und danach in umgekehrter Richtung erneut den zweiten Lichtmodulator (4) und das erste λ/2-Phasenplättchen (1) durchläuft und von dort auf den Analysator (P2, ST1, ST2, ST3) trifft, wobei
a) das erste λ/2-Phasenplättchen (1) eine erste Indikatrix besitzt, welche
- ohne äußeres elektrisches Feld in einer ersten Ruhelagen-Richtung (R1) verläuft,
- bei Anliegen eines ersten äußeren elektrischen Feldes (+E1) in einer ersten Auslenkungsrichtung (A) verläuft, die gegenüber der ersten Ruhelagen-Richtung (R1) um einen ersten, von der Lichtintensität unabhängigen Winkel (+α) um Richtung des ersten äußeren elektrischen Feldes (+E1) gedreht ist, und
- bei Anliegen eines dem ersten äußeren elektrischen Feld (+E1) entgegengesetzt gleichen zweiten äußeren elektrischen Feldes (-E1) in einer zweiten Auslenkungsrichtung (B) verläuft, die gegenüber der ersten Ruhelagen-Richtung (R1) um einen zweiten Winkel (-α) gedreht ist, welcher dem ersten Winkel (+α) entgegengesetzt gleich ist,
b) der zweite Lichtmodulator (4) eine vierte Indikatrix besitzt, welche
- ohne äußeres elektrisches Feld in einer zweiten Ruhelagen-Richtung (R2) verläuft,
- bei Anliegen eines siebten äußeren elektrischen Feldes (+E4) in einer dritten Auslenkungsrichtung (C) verläuft, welche gegenüber der zweiten Ruhelagen-Richtung (R2) um einen dritten Winkel (+β), um die Richtung des siebten äußeren elektrischen Feldes (+E4) gedreht ist,
- bei Anliegen eines dem siebten äußeren elektrischen Feld (+E4) entgegengesetzt gleichen achten äußeren elektrischen Feldes (-E4) in einer vierten Auslenkungsrichtung (D) verläuft, welche gegenüber der zweiten Ruhelagen-Richtung (R2) um einen dem dritten Winkel (+β) entgegengesetzt gleichen vierten Winkel (-β) gedreht ist,
- wobei der Betrag des dritten und des vierten Winkels (+β, -β) mit zunehmender Lichtintentsität bis zu einem bestimmten Maximalwert (βmax), nicht jedoch über diesen hinaus zunimmt und die dritte bzw. vierte Auslenkungsrichtung (C, D) eine erste bzw. zweite Grenz-Auslenkungsrichtung (Cmax, Dmax) erreicht, falls der Betrag des dritten bzw. vierten Winkels (+β, -β) den Maximalwert (βmax) erreicht,
c) das erste und das zweite Phasenplättchen (1, 2) und der erste Lichtmodulator (3) so zueinander und gegenüber dem Polarisator (P11, ST1, ST2, ST3) ausgerichtet sind, daß
- die erste Auslenkungsrichtung (A) und die erste Grenz-Auslenkungsrichtung (Cmax) parallel zueinander und parallel oder senkrecht zur Eingangs-Polarisationsrichtung (EPR1, EPR2) verlaufen, oder
- die zweite Auslenkungsrichtung (B) und die zweite Grenz-Auslenkungsrichtung (Dmax) parallel zueinander und parallel oder senkrecht zur Eingangs-Polarisationsrichtung (EPR1, EPR2) verlaufen,
d) an das erste Phasenplättchen (1) das erste oder zweite äußere elektrische Feld (+E1, -E1) und an den zweiten Lichtmodulator (4) das siebte oder achte äußere elektrische Feld (+E4, -E4) angelegt ist, und
e) das erste bzw. zweite und das siebte bzw. achte äußere elektrische Feld (+E1, -E1, +E4, -E4) so gewählt sind, daß der erste Winkel (α) und der Maximalwert (βmax) die Bedingung 2α-βmax = n•45° + T erfüllen, wobei n=0,1,2,3,... und T eine Toleranz von ±5° ist.

6. Vorrichtung nach Anspruch 5, **dadurch gekennzeichnet,**
**daß** das erste λ/2-Phasenplättchen (1), der zweite Lichtmodulator (4) und der Spiegel (5) parallel zueinander angeordnet sind.

7. Vorrichtung nach Anspruch 5, **dadurch gekennzeichnet,**
**daß** das erste bzw. zweite äußere elektrische Feld (+E1, -E1) durch einen ersten Plattenkondensator (C1) erzeugt wird, zwischen dessen Platten sich das erste Phasenplättchen (1) befindet, und das siebte bzw. achte äußere elektrische Feld (+E4, -E4) durch einen vierten Plattenkondensator (C4) erzeugt wird, zwischen dessen Platten sich der zweite Lichtmodulator (4) befindet.

8. Vorrichtung nach Anspruch 7, **dadurch gekennzeichnet,**
**daß** den Plattenkondensatoren (C1, C4) je eine Wechselspannung (U1, U4) mit im wesentlichen rechteckförmigem zeitlichen Verlauf anliegt, wobei die Nulldurchgänge der Wechselspannungen (U1, U4) jeweils gleichzeitig erfolgen.

9. Vorrichtung nach Anspruch 3 oder 7, **dadurch gekennzeichnet,**
**daß** die Platten der Plattenkondensatoren (C1, C2, C3, C4) durch für Licht zumindest teildurchlässige elektrisch leitende Schichten gebildet sind, welche unmittelbar auf den Lichtdurchtrittsflächen der Phasenplättchen (1, 3) bzw. der Lichtmodulatoren (2, 4) oder mit Hilfe eines transparenten Trägermaterials in einem Abstand parallel zu denselben angeordnet sind.

10. Vorrichtung nach Anspruch 9, **dadurch gekennzeichnet,**
**daß** die Schichten aus einer dünnen Lage von Metall bestehen.

11. Vorrichtung nach Anspruch 9, **dadurch gekennzeichnet,**
**daß** die Schichten aus Indium-Zinn-Oxid bestehen.

12. Vorrichtung nach Anspruch 4 oder 8, **dadurch gekennzeichnet,**
**daß** die Wechselspannungen (U1, U2, U3, U4) aus einer gemeinsamen Spannungsquelle (20) stammen.

13. Vorrichtung nach Anspruch 5, **dadurch gekennzeichnet,**
**daß** der Polarisator (P1) und der Analysator (P2) gemeinsam durch einen polarisierenden Strahlenteiler (ST1, ST2, ST3) gebildet sind, welcher für einfallendes Licht (10a, 10b) als Polarisator und zugleich für am Spiegel (5) reflektiertes Licht als Analysator fungiert.

14. Vorrichtung nach Anspruch 13, **dadurch gekennzeichnet,**
**daß** das einfallende Licht (10a, 10b) durch den polarisierenden Strahlenteiler (ST2, ST3) zerlegt wird
- in einen linear polarisierten ersten Teilstrahl (T1), welcher im polarisierenden Strahlenteiler (ST2, ST3) abgelenkt wird,
- und in einen zum ersten Teilstrahl (T1) senkrecht linear polarisierten zweiten Teilstrahl (T2), welcher im polarisierenden Strahlenteiler (ST2, ST3) nicht abgelenkt wird,
wobei der erste und der zweite Teilstrahl (T1, T2) getrennt voneinander jeweils durch das erste λ/2-Phasenplättchen (1) und den zweiten Lichtmodulator (4) durchlaufen und auf den Spiegel (5) treffen und von dort in umgekehrter Reihenfolge erneut den zweiten Lichtmodulator (4) und das erste λ/2-PhasenpIättchen (1) durchlaufen und erneut in den polarisierenden Strahlenteiler (ST2, ST3) gelangen, wo
- der erste Teilstrahl (T1) zerlegt wird in einen dritten Teilstrahl (T11), welcher parallel zum ersten Teilstrahl (T1) linear polarisiert ist und im polarisierenden Strahlenteiler (ST2, ST3) abgelenkt wird, und in einen zum ersten Teilstrahl (T1) senkrecht linear polarisierten vierten Teilstrahl (T12), welcher im polarisierenden Strahlenteiler (ST2, ST3) nicht abgelenkt wird,
- und der zweite Teilstrahl (T2) zerlegt wird in einen fünften Teilstrahl (T21), welcher senkrecht zum zweiten Teilstrahl (T2) linear polarisiert ist und im polarisierenden Strahlenteiler (ST2, ST3) abgelenkt wird, und in einen zum zweiten Teilstrahl (T2) parallel linear polarisierten sechsten Teilstrahl (T22), welcher im polarisierenden Strahlenteiler (ST2, ST3) nicht abgelenkt wird.

15. Vorrichtung nach Anspruch 14, **dadurch gekennzeichnet,**
**daß** der polarisierende Strahlenteiler (ST2, ST3) so geformt und angeordnet ist, daß der Weg des vierten Teilstrahls (T12) mit dem Weg des fünften Teilstrahls (T21) zusammenfällt.

16. Vorrichtung nach Anspruch 14 oder 15, **dadurch gekennzeichnet,**
**daß** zwischen dem polarisierenden Strahlenteiler (ST2, ST3) und dem ersten λ/2-Phasenplättchen (1) mindestens eine Lichtablenkfläche (8, 9, 9') angeordnet ist, welche den ersten bzw. den zweiten Teilstrahl (T1, T2) so ablenkt, daß der erste und der zweite Teilstrahl (T1, T2) parallel zueinander verlaufen.

17. Vorrichtung nach Anspruch 14 oder 15, **dadurch gekennzeichnet,**
**daß** der polarisierende Strahlenteiler (ST2, ST3) mindestens eine Lichtablenkfläche (8, 9) aufweist, welche den ersten bzw. den zweiten Teilstrahl (T1, T2) so ablenkt, daß der erste und der zweite Teilstrahl (T1, T2) zwischen auf dem Weg von der Lichtablenkfläche (8, 9) zum Spiegel 5 parallel zueinander verlaufen.

18. Vorrichtung nach einem der vorhergehenden Ansprüche, **dadurch gekennzeichnet,**
**daß** ein Objektiv (22) so angeordnet ist, daß es ein Sehfeld auf den Lichtmodulator (2, 4) abzubilden imstande ist.

19. Vorrichtung nach Anspruch 18, **dadurch gekennzeichnet,**
**daß** ein Okular (23) so angeordnet ist, daß das Bild des Sehfeldes mittels des Okulars (23) betrachtbar ist.

20. Vorrichtung nach Anspruch 1 oder 5, **dadurch gekennzeichnet,**
**daß** der Lichtmodulator (2, 4) einen Flüssigkristallfilm aus chiralem smektisch-C-Material aufweist, dessen Moleküle eine ferroelektrisch deformierbare Helix besitzen.

21. Vorrichtung nach Anspruch 5, **dadurch gekennzeichnet,**
**daß** vor dem Spiegel (5) ein Kollimator angeordnet ist.

22. Vorrichtung nach Anspruch 1, **dadurch gekennzeichnet,**
**daß** das erste und das zweite λ/2-Phasenplättchen (1, 2) baugleich sind und das erste, zweite, fünfte und sechste elektrische Feld (+E1, -E1, +E3, -E3) jeweils den gleichen Betrag der elektrischen Feldstärke aufweisen.

23. Verfahren zur intensitätsabhängigen Abschwächung von Licht, welches einen Polarisator (P1), welcher in einer Eingangs-Polarisationsrichtung (EPR1, EPR2) linear polarisiertes Licht passieren läßt, durchläuft und auf einen zu diesem im wesentlichen oder um 90° gekreuzten Analysator (P2) trifft, **dadurch gekennzeichnet**
**daß** das Licht nacheinander den Polarisator (P1), ein erstes λ/2-Phasenplättchen (1), einen einen als λ/2-Phasenplättchen ausgebildeten ersten optisch adressierbaren ortsauflösenden ersten Lichtmodulator (3) und ein zweite λ/2-Phasenplättchen (3) durchläuft und von dort auf den Analysator (P2) trifft, wobei
a) das erste λ/2-Phasenplättehen (1) eine erste Indikatrix besitzt, welche
- ohne äußeres elektrisches Feld in einer ersten Ruhelagen-Richtung (R1) verläuft,
- bei Anliegen eines ersten äußeren elektrischen Feldes (+E1) in einer ersten Auslenkungsrichtung (A) verläuft, die gegenüber der ersten Ruhelagen-Richtung (R1) um einen ersten, von der Lichtintensität unabhängigen Winkel (+α) um die Richtung des ersten äußeren elektrischen Feldes (+E1) gedreht ist, und
- bei Anliegen eines dem ersten äußeren elektrischen Feld (+E1) entgegengesetzt gleichen zweiten äußeren elektrischen Feldes (-E1) in einer zweiten Auslenkungsrichtung (B) verläuft, die gegenüber der ersten Ruhelagen-Richtung (R1) um einen zweiten Winkel (-α) gedreht ist, welcher dem ersten Winkel (+α) entgegengesetzt gleich ist,
b) der erste Lichtmodulator (2) eine zweite Indikatrix besitzt, welche ohne äußeres elektrisches Feld in einer zweiten Ruhelagen-Richtung (R2) verläuft,
- bei Anliegen eines dritten äußeren elektrischen Feldes (+E2) in einer dritten Auslenkungsrichtung (C) verläuft, welche gegenüber der zweiten Ruhelagen-Richtung (R2) um einen dritten Winkel (+β) um die Richtung des dritten äußeren elektrischen Feldes (+E2) gedreht ist,
- bei Anliegen eines dem dritten äußeren elektrischen Feld (+E2) entgegengesetzt gleichen vierten äußeren elektrischen Feldes (-E2) in einer vierten Auslenkungsrichtung (D) verläuft, welche gegenüber der zweiten Ruhelagen-Richtung (R2) um einen dem dritten Winkel (+β) entgegengesetzt gleichen vierten Winkel (-β) gedreht ist,
- wobei der Betrag des dritten und des vierten Winkels (+β, -β) mit zunehmender Lichtintentsität bis zu einem bestimmten Maximalwert (βmax), nicht jedoch über diesen hinaus zunimmt und die dritte bzw. vierte Auslenkungsrichtung (C, D) eine erste bzw. zweite Grenz-Auslenkungsrichtung (Cmax, Dmax) erreicht, falls der Betrag des dritten bzw. vierten Winkels (+β, -β) den Maximalwert (βmax) erreicht,
c) das zweite λ/2-Phasenplättchen (3) eine dritte Indikatrix besitzt, welche ohne äußeres elektrisches Feld in der ersten Ruhelagen-Richtung (R1) verläuft,
- bei Anliegen eines fünften äußeren elektrischen Feldes (+E3) in der ersten Auslenkungsrichtung (A) verläuft, und
- bei Anliegen eines sechsten, dem fünften äußeren elektrischen Feld (+E3) entgegengesetzt gleichen äußeren elektrischen Feldes (-E3) in der zweiten Auslenkungsrichtung (B) verläuft,
d) das erste und das zweite Phasenplättchen (1, 3) und der erste Lichtmodulator (2) so zueinander und gegenüber dem Polarisator (P1) ausgerichtet sind, daß
- die erste Auslenkungsrichtung (A) und die erste Grenz-Auslenkungsrichtung (Cmax) parallel zueinander und parallel oder senkrecht zur Eingangs-Polarisationsrichtung (EPR1, EPR2) verlaufen, oder
- die zweite Auslenkungsrichtung (B) und die zweite Grenz-Auslenkungsrichtung (Dmax) parallel zueinander und parallel oder senkrecht zur Eingangs-Polarisationsrichtung (EPR1, EPR2) verlaufen,
e) an das erste Phasenplättchen (1) das erste oder zweite äußere elektrische Feld (+E1, -E1), an den ersten Lichtmodulator (2) das dritte oder vierte äußere elektrische Feld (+E2, -E2) und an das zweite Phasenplättchen (3) das fünfte oder sechste äußere elektrische Feld (+E3, -E3) angelegt ist, und
f) das erste bzw. zweite, das dritte bzw. vierte und das fünfte bzw. sechste äußere elektrische Feld (+E1, -E1, +E2, -E2, +E3, -E3) so gewählt sind, daß der erste Winkel (α) und der Maximalwert (βmax) die Bedingung 2α-βmax = n•45° + T erfüllen, wobei n=0,1,2,3,... und T eine Toleranz von ±5° ist.

24. Verfahren nach Anspruch 23, **dadurch gekennzeichnet,**
**daß** das erste bzw. zweite äußere elektrische Feld (+E1, -E1) durch einen ersten Plattenkondensator (C1) erzeugt wird, zwischen dessen Platten sich das erste Phasenplättchen (1) befindet, das dritte bzw. vierte äußere elektrische Feld (+E2, -E2) durch einen zweiten Plattenkondensator (C2) erzeugt wird, zwischen dessen Platten sich der erste Lichtmodulator (2) befindet, und das fünfte bzw. sechste äußere elektrische Feld (+E3, -E3) durch einen dritten Plattenkondensator (C3) erzeugt wird, zwischen dessen Platten sich das zweite Phasenplättchen (3) befindet.

25. Verfahren nach Anspruch 24, **dadurch gekennzeichnet,**
**daß** an den Plattenkondensatoren (C1, C2, C3) je eine Wechselspannung (U1, U2, U3) mit im wesentlichen rechteckförmigem zeitlichen Verlauf anliegt, wobei die Nulldurchgänge aller Wechselspannungen (U1, U2, U3) jeweils gleichzeitig erfolgen.

26. Verfahren zur intensitätsabhängigen Abschwächung von Licht, welches einen Polarisator (P1), welcher in einer Eingangs-Polarisationsrichtung (EPR1, EPR2) linear polarisiertes Licht passieren läßt, durchläuft und auf einen zu diesem im wesentlichen oder um 90° gekreuzten Analysator (P2, ST1, ST2, ST3) trifft, **gekennzeichnet durch**
ein erstes λ/2-Phasenplättchen (1), einen als λ/4-Phasenplättchen ausgebildeten zweiten optisch adressierbaren ortsauflösenden Lichtmodulator (4) und einen Spiegel (5), wobei einfallendes Licht (10a, 10b) nacheinander den Polarisator (P1, ST1, ST2, ST3), das erste λ/2-Phasenplättchen (1) und den zweiten Lichtmodulator (4) durchläuft, von dort auf den Spiegel (5) trifft und danach in umgekehrter Richtung erneut den zweiten Lichtmodulator (4) und das erste λ/2-Phasenplättchen (1) durchläuft und von dort auf den Analysator (P2, ST1, ST2, ST3) trifft, wobei
a) das erste λ/2-Phasenplättchen (1) eine erste Indikatrix besitzt, welche
- ohne äußeres elektrisches Feld in einer ersten Ruhelagen-Richtung (R1) verläuft,
- bei Anliegen eines ersten äußeren elektrischen Feldes (+E1) in einer ersten Auslenkungsrichtung (A) verläuft, die gegenüber der ersten Ruhelagen-Richtung (R1) um einen ersten, von der Lichtintensität unabhängigen Winkel (+α) um Richtung des ersten äußeren elektrischen Feldes (+E1) gedreht ist, und
- bei Anliegen eines dem ersten äußeren elektrischen Feld (+E1) entgegengesetzt gleichen zweiten äußeren elektrischen Feldes (-E1) in einer zweiten Auslenkungsrichtung (B) verläuft, die gegenüber der ersten Ruhelagen-Richtung (R1) um einen zweiten Winkel (-α) gedreht ist, welcher dem ersten Winkel (+α) entgegengesetzt gleich ist,
b) der zweite Lichtmodulator (4) eine vierte Indikatrix besitzt, welche
- ohne äußeres elektrisches Feld in einer zweiten Ruhelagen-Richtung (R2) verläuft,
- bei Anliegen eines siebten äußeren elektrischen Feldes (+E4) in einer dritten Auslenkungsrichtung (C) verläuft, welche gegenüber der zweiten Ruhelagen-Richtung (R2) um einen dritten Winkel (+β), um die Richtung des siebten äußeren elektrischen Feldes (+E4) gedreht ist, bei Anliegen eines dem siebten äußeren elektrischen Feld (+E4). entgegengesetzt gleichen achten äußeren elektrischen Feldes (-E4) in einer vierten Auslenkungsrichtung (D) verläuft, welche gegenüber der zweiten Ruhelagen-Richtung (R2) um einen dem dritten Winkel (+β) entgegengesetzt gleichen vierten Winkel (-β) gedreht ist,
- wobei der Betrag des dritten und des vierten Winkels (+β, -β) mit zunehmender Lichtintentsität bis zu einem bestimmten Maximalwert (βmax), nicht jedoch über diesen hinaus zunimmt und die dritte bzw. vierte Auslenkungsrichtung (C, D) eine erste bzw. zweite Grenz-Auslenkungsrichtung (Cmax, Dmax) erreicht, falls der Betrag des dritten bzw. vierten Winkels (+β, -β) den Maximalwert (βmax) erreicht,
c) das erste und das zweite Phasenplättchen (1, 2) und der erste Lichtmodulator (3) so zueinander und gegenüber dem Polarisator (P11, ST1, ST2, ST3) ausgerichtet sind, daß
- die erste Auslenkungsrichtung (A) und die erste Grenz-Auslenkungsrichtung (Cmax) parallel zueinander und parallel oder senkrecht zur Eingangs-Polarisationsrichtung (EPR1, EPR2) verlaufen, oder
- die zweite Auslenkungsrichtung (B) und die zweite Grenz-Auslenkungsrichtung (Dmax) parallel zueinander und parallel oder senkrecht zur Eingangs-Polarisationsrichtung (EPR1, EPR2) verlaufen,
d) an das erste Phasenplättchen (1) das erste oder zweite äußere elektrische Feld (+E1, -E1) und an den zweiten Lichtmodulator (4) das siebte oder achte äußere elektrische Feld (+E4, -E4) angelegt ist, und
e) das erste bzw. zweite und das siebte bzw. achte äußere elektrische Feld (+E1, E1, +E4, -E4) so gewählt sind, daß der erste Winkel (α) und der Maximalwert (βmax) die Bedingung 2α-βmax = n•45° + T erfüllen, wobei n=0,1,2,3,... und T eine Toleranz von ±5° ist.

27. Verfahren nach Anspruch 26, **dadurch gekennzeichnet,**
**daß** das erste bzw. zweite äußere elektrische Feld (+E1, -E1) durch einen ersten Plattenkondensator (C1) erzeugt wird, zwischen dessen Platten sich das erste Phasenplättchen (1) befindet, und das siebte bzw. achte äußere elektrische Feld (+E4, -E4) durch einen vierten Plattenkondensator (C4) erzeugt wird, zwischen dessen Platten sich der zweite Lichtmodulator (4) befindet.

28. Verfahren nach Anspruch 27, **dadurch gekennzeichnet,**
**daß** den Plattenkondensatoren (C1, C4) je eine Wechselspannung (U1, U4) mit im wesentlichen rechteckförmigem zeitlichen Verlauf anliegt, wobei die Nulldurchgänge der Wechselspannungen (U1, U4) jeweils gleichzeitig erfolgen.

29. Verfahren nach Anspruch 25 oder 28, **dadurch gekennzeichnet,**
**daß** die Wechselspannungen (U1, U2, U3, U4) aus einer gemeinsamen Spannungsquelle (20) stammen.

30. Verfahren nach Anspruch 26, **dadurch gekennzeichnet,**
**daß** der Polarisator (P1) und der Analysator (P2) gemeinsam durch einen polarisierenden Strahlenteiler (ST1, ST2, ST3) gebildet sind, welcher für einfallendes Licht (10a, 10b) als Polarisator und zugleich für am Spiegel (5) reflektiertes Licht als Analysator fungiert.

31. Verfahren nach Anspruch 30, **dadurch gekennzeichnet,**
**daß** das einfallende Licht (10a, 10b) durch den polarisierenden Strahlenteiler (ST2, ST3) zerlegt wird
- in einen linear polarisierten ersten Teilstrahl (T1), welcher im polarisierenden Strahlenteiler (ST2, ST3) abgelenkt wird,
- und in einen zum ersten Teilstrahl (T1) senkrecht linear polarisierten zweiten Teilstrahl (T2), welcher im polarisierenden Strahlenteiler (ST2, ST3) nicht abgelenkt wird,
wobei der erste und der zweite Teilstrahl (T1, T2) getrennt voneinander jeweils durch das erste λ/2-Phasenplättchen (1) und den zweiten Lichtmodulator (4) durchlaufen und auf den Spiegel (5) treffen und von dort in umgekehrter Reihenfolge erneut den zweiten Lichtmodulator (4) und das erste λ/2-Phasenplättchen (1) durchlaufen und erneut in den polarisierenden Strahlenteiler (ST2, ST3) gelangen, wo
- der erste Teilstrahl (T1) zerlegt wird in einen dritten Teilstrahl (T11), welcher parallel zum ersten Teilstrahl (T1) linear polarisiert ist und im polarisierenden Strahlenteiler (ST2, ST3) abgelenkt wird, und in einen zum ersten Teilstrahl (T1) senkrecht linear polarisierten vierten Teilstrahl (T12), welcher im polarisierenden Strahlenteiler (ST2, ST3) nicht abgelenkt wird,
- und der zweite Teilstrahl (T2) zerlegt wird in einen fünften Teilstrahl (T21), welcher senkrecht zum zweiten Teilstrahl (T2) linear polarisiert ist und im polarisierenden Strahlenteiler (ST2, ST3) abgelenkt wird, und in einen zum zweiten Teilstrahl (T2) parallel linear polarisierten sechsten Teilstrahl (T22), welcher im polarisierenden Strahlenteiler (ST2, ST3) nicht abgelenkt wird.

32. Verfahren nach Anspruch 14, **dadurch gekennzeichnet,**
**daß** der Weg des vierten Teilstrahls (T12) mit dem Weg des fünften Teilstrahls (T21) zusammenfällt.

33. Verfahren nach einem der Ansprüche 23 bis 32, **dadurch gekennzeichnet,**
**daß** ein Objektiv (22) ein Sehfeld auf den Lichtmodulator (2, 4) abbildet.

34. Vorrichtung nach Anspruch 33, **dadurch gekennzeichnet,**
**daß** ein Okular (23) so angeordnet ist, daß das Bild des Sehfeldes mittels des Okulars (23) betrachtbar ist.

35. Vorrichtung nach Anspruch 23, **dadurch gekennzeichnet,**
**daß** das erste und das zweite λ/2-Phasenplättchen (1, 2) baugleich sind und das erste, zweite, fünfte und sechste elektrische Feld (+E1, -E1, +E3, -E3) jeweils den gleichen Betrag der elektrischen Feldstärke aufweisen.

## Claims

1. Intensity-dependent attenuation device for light, with a polarizer (P1), said polarizer (P1) allowing linearly polarized light to pass in an input polarization direction (EPR1, EPR2), and with an analyzer (P2), said analyzer (P2) being substantially or 90°-crossed with respect to said polarizer (P1), **characterized by** a first and a second λ/2 phase plate (1, 3) and by a first optically addressable spatial light modulator (2) in the form of a λ/2 phase plate, wherein incident light (10a, 10b) passes successively through the polarizer (P1), the first λ/2 phase plate (1), the first light modulator (3) and the second λ/2 phase plate (3) and from there impinges on the analyzer (P2), wherein
a) the first λ/2 phase plate (1) has a first indicatrix, said first indicatrix
- extending - when there is no external electrical field - in a first rest-position direction (R1);
- extending - when a first external electrical field (+E1) is present - in a first deflection direction (A), said first deflection direction (A) being rotated with respect to the first rest-position direction (R1) by a first, light-intensity-independent angle (+α) about the direction of the first external electrical field (+E1); and
- extending - when a second external electrical field (-E1) oppositely equal to the first external electrical field (+E1) is present - in a second deflection direction (B), said second deflection direction (B) being rotated with respect to the first rest-position direction (R1) by a second angle (-α), said second angle (-α) being oppositely equal to the first angle (+α);
b) the first light modulator (2) has a second indicatrix, said second indicatrix
- extending - when there is no external electrical field - in a second rest-position direction (R2);
- extending - when a third external electrical field (+E2) is present - in a third deflection direction (C), said third deflection direction (C) being rotated with respect to the second rest-position direction (R2) by a third angle (+β) about the direction of the third external electrical field (+E2);
- extending - when a fourth external electrical field (-E2) oppositely equal to the third external electrical field (+E2) is present - in a fourth deflection direction (D), said fourth deflection direction (D) being rotated with respect to the second rest-position direction (R2) by a fourth angle (-β), said fourth angle (-β) being oppositely equal to the third angle (+β);
- the values of the third and fourth angles (+β, -β) increasing with increasing light intensity up to a defined maximum value (ßmax) but not beyond said maximum value (βmax), and the third and fourth deflection directions (C, D), respectively, reaching first and second maximum deflection directions (Cmax, Dmax) when the values of the third and fourth angles (+β, -β) reach the maximum value (βmax);
c) the second λ/2 phase plate (3) has a third indicatrix, said third indicatrix
- extending - when there is no external electrical field - in the first rest-position direction (R1);
- extending - when a fifth external electrical field (+E3) is present - in the first deflection direction (A); and
- extending - when a sixth external electrical field (-E3) oppositely equal to the fifth external electrical field (+E3) is present - in the second deflection direction (B);
d) the first and second phase plates (1, 3) and the first light modulator (2) are so aligned with respect to each other and with respect to the polarizer (P1) that
- the first deflection direction (A) and the first maximum deflection direction (Cmax) extend parallel to each other and parallel or perpendicularly to the input polarization direction (EPR1, EPR2); or
- the second deflection direction (B) and the second maximum deflection direction (Dmax) extend parallel to each other and parallel or perpendicularly to the input polarization direction (EPR1, EPR2);
e) the first phase plate (1) is connected to the first or second external electrical field (+E1, -E1); the first light modulator (2) is connected to the third or fourth external electrical field (+E2, -E2) and the second phase plate (3) is connected to the fifth or sixth external electrical field (+E3, -E3); and
f) the first and second, third and fourth and fifth and sixth external electrical fields (+E1, -E1, +E2, -E2, +E3, -E3) are so selected that the first angle (α) and the maximum value (βmax) satisfy the condition 2α-βmax = n·45° + T, where n=0,1,2,3,... and T is a tolerance of ±5°.

2. Device according to claim 1, **characterized in that**
the first and second λ/2 phase plates (1, 3) and the first light modulator (2) are disposed parallel to each other.

3. Device according to claim 1, **characterized in that**
the first and second external electrical fields (+E1, -E1) are produced by a first plate capacitor (C1), the first phase plate (1) being positioned between the plates of said first plate capacitor (C1), the third and fourth external electrical fields (+E2, -E2) being produced by a second plate capacitor (C2), the first light modulator (2) being positioned between the plates of said second plate capacitor (C2), and the fifth and sixth external electrical fields (+E3, -E3) being produced by a third plate capacitor (C3), the second phase plate (3) being positioned between the plates of said third plate capacitor (C3).

4. Device according to claim 3, **characterized in that**
the plate capacitors (C1, C2, C3) are each connected to an alternating voltage (U1, U2, U3) of substantially rectangular waveform as a function of time, wherein the zero crossings of all alternating voltages (U1, U2, U3) take place simultaneously.

5. Intensity-dependent attenuation device for light, with a polarizer (P1, ST1, ST2), said polarizer allowing linearly polarized light to pass in an input polarization direction (EPR1, EPR2), and with an analyzer (P2, ST1, ST2, ST3), said analyzer (P2, ST1, ST2, ST3) being substantially or 90°-crossed with respect to said polarizer (P1, ST1, ST2), **characterized by**
a first λ/2 phase plate (1), a second optically addressable spatial light modulator (4) in the form of a λ/4 phase plate and by a mirror (5), wherein incident light (10a, 10b) passes successively through the polarizer (P1, ST1, ST2, ST3), the first λ/2 phase plate (1) and the second light modulator (4), impinges from there on the mirror (5) and then in the opposite direction passes once again through the second light modulator (4) and the first λ/2 phase plate (1) and from there impinges on the analyzer (P2, ST1, ST2, ST3), wherein
a) the first λ/2 phase plate (1) has a first indicatrix, said first indicatrix
- extending - when there is no external electrical field - in a first rest-position direction (R1);
- extending - when a first external electrical field (+E1) is present - in a first deflection direction (A), said first deflection direction (A) being rotated with respect to the first rest-position direction (R1) by a first, light-intensity-independent angle (+α) about the direction of the first external electrical field (+E1); and
- extending - when a second external electrical field (-E1) oppositely equal to the first external electrical field (+E1) is present - in a second deflection direction (B), said second deflection direction (B) being rotated with respect to the first rest-position direction (R1) by a second angle (-α), said second angle (-α) being oppositely equal to the first angle (+α);
b) the second light modulator (4) has a fourth indicatrix, said fourth indicatrix
- extending - when there is no external electrical field - in a second rest-position direction (R2);
- extending - when a seventh external electrical field (+E4) is present - in a third deflection direction (C), said third deflection direction (C) being rotated with respect to the second rest-position direction (R2) by a third angle (+β) about the direction of the seventh external electrical field (+E4);
- extending - when an eighth external electrical field (-E4) oppositely equal to the seventh external electrical field (+E4) is present - in a fourth deflection direction (D), said fourth deflection direction (D) being rotated with respect to the second rest-position direction (R2) by a fourth angle (-β), said fourth angle (-β) being oppositely equal to the third angle (+β);
- the values of the third and fourth angles (+β, -β) increasing with increasing light intensity up to a defined maximum value (βmax) but not beyond said maximum value (βmax), and the third and fourth deflection directions (C, D), respectively, reaching first and second maximum deflection directions (Cmax, Dmax) when the values of the third and fourth angles (+β, -β) reach the maximum value (βmax);
c) the first and second phase plates (1,2) and the first light modulator (3) are so aligned with respect to each other and with respect to the polarizer (P11, ST1, ST2, ST3) that
- the first deflection direction (A) and the first maximum deflection direction (Cmax) extend parallel to each other and parallel or perpendicularly to the input polarization direction (EPR1, EPR2); or
- the second deflection direction (B) and the second maximum deflection direction (Dmax) extend parallel to each other and parallel or perpendicularly to the input polarization direction (EPR1, EPR2);
d) the first phase plate (1) is connected to the first or second external electrical field (+E1, -E1) and the second light modulator (4) is connected to the seventh or eighth external electrical field (+E4, -E4); and
e) the first and second and the seventh and eighth external electrical fields (+E1, -E1, +E4, -E4) are so selected that the first angle (α) and the maximum value (βmax) satisfy the condition 2α-βmax = n·45° + T, where n=0,1,2,3,... and T is a tolerance of ±5°.

6. Device according to claim 5, **characterized in that**
the first λ/2 phase plate (1), the second light modulator (4) and the mirror (5) are disposed parallel to each other.

7. Device according to claim 5, **characterized in that**
the first and second external electrical fields (+E1, -E1) are produced by a first plate capacitor (C1), the first phase plate (1) being positioned between the plates of said first plate capacitor (C1), and the seventh and eighth external electrical fields (+E4, - E4) being produced by a fourth plate capacitor (C4), the second light modulator (4) being positioned between the plates of said fourth plate capacitor (C4).

8. Device according to claim 7, **characterized in that**
the plate capacitors (C1, C4) are each connected to an alternating voltage (U1, U4) of substantially rectangular waveform as a function of time, wherein the zero crossings of the alternating voltages (U1, U4) take place simultaneously.

9. Device according to claim 3 or 7, **characterized in that**
the plates of the plate capacitors (C1, C2, C3, C4) are formed by electrically conducting layers which are at least partially light-permeable, said layers being disposed directly on the light-transmitting surfaces of the phase plates (1; 3) or-light modulators (2, 4) or, with the aid of a transparent substrate material, at a distance parallel thereto.

10. Device according to claim 9, **characterized in that**
the layers consist of a thin layer of metal.

11. Device according to claim 9, **characterized in that**
the layers consist of indium-tin oxide.

12. Device according to claim 4 or 8, **characterized in that**
the alternating voltages (U1, U2, U3, U4) originate from a common voltage source (20).

13. Device according to claim 5, **characterized in that**
the polarizer (P1) and the analyzer (P2) are formed jointly by a polarizing beam splitter (ST1, ST2, ST3), said beam splitter (ST1, ST2, ST3) acting as a polarizer for incident light (10a, 10b) and at the same time as an analyzer for light reflected by the mirror (5).

14. Device according to claim 13, **characterized in that**
the incident light (10a, 10b) is separated by the polarizing beam splitter (ST2, ST3)
- into a linearly polarized first subbeam (T1), said first subbeam (T1) being deflected in the polarizing beam splitter (ST2, ST3),
- and into a second subbeam (T2), said second subbeam (T2) being linearly polarized perpendicularly to the first subbeam (T1) and not being deflected in the polarizing beam splitter (ST2, ST3),
wherein the first and second subbeams (T1, T2) each pass separately from each other through the first λ/2 phase plate (1) and through the second light modulator (4) and impinge on the mirror (5) and from there in the reverse sequence pass once again through the second light modulator (4) and the first λ/2 phase plate (1) and once again enter the polarizing beam splitter (ST2, ST3), where
- the first subbeam (T1) is separated into a third subbeam (T11), said third subbeam (T11) being linearly polarized parallel to the first subbeam (T1) and being deflected in the polarizing beam splitter (ST2, ST3), and into a fourth subbeam (T12), said fourth subbeam (T12) being linearly polarized perpendicularly to the first subbeam (T1) and not being deflected in the polarizing beam splitter (ST2, ST3);
- and the second subbeam (T2) is separated into a fifth subbeam (T21), said fifth subbeam (T21) being linearly polarized perpendicularly to the second subbeam (T2) and being deflected in the polarizing beam splitter (ST2, ST3), and into a sixth subbeam (T22), said sixth subbeam (T22) being linearly polarized parallel to the second subbeam (T2) and not being deflected in the polarizing beam splitter (ST2, ST3).

15. Device according to claim 14, **characterized in that**
the polarizing beam splitter (ST2, ST3) is so formed and disposed that the path of the fourth subbeam (T12) coincides with the path of the fifth subbeam (T21).

16. Device according to claim 14 or 15, **characterized in that**
disposed between the polarizing beam splitter (ST2, ST3) and the first λ/2 phase plate (1) is at least one light-deflecting surface (8, 9, 9'), said light-deflecting surface (8, 9, 9') deflecting the first and second subbeams (T1, T2) such that the first and second subbeams (T1, T2) extend parallel to each other.

17. Device according to claim 14 or 15, **characterized in that**
the polarizing beam splitter (ST2, ST3) has at least one light-deflecting surface (8, 9), said light-deflecting surface (8, 9) deflecting the first and second subbeams (T1, T2) such that the first and second subbeams (T1, T2) extend parallel to each other on the path from the light-deflecting surface (8, 9) to the mirror (5).

18. Device according to any one of the preceding claims, **characterized in that**
a lens (22) is so disposed that it is capable of imaging a visual field onto the light modulator (2, 4).

19. Device according to claim 18, **characterized in that**
an eyepiece (23) is so disposed that the image of the visual field can be viewed by means of the eyepiece (23).

20. Device according to claim 1 or 5, **characterized in that**
the light modulator (2, 4) has a liquid-crystal film of chiral smectic-C material whose molecules have a ferroelectrically deformable helix.

21. Device according to claim 5, **characterized in that**
a collimator is disposed in front of the mirror (5).

22. Device according to claim 1, **characterized in that**
the first and second λ/2 phase plates (1, 2) are of identical construction and the first, second, fifth and sixth electric fields (+E1, -E1, +E3, -E3) each have the same value of electrical field strength.

23. Method for the intensity-dependent attenuation of light, said light passing through a polarizer (P1), said polarizer (P1) allowing linearly polarized light to pass in an input polarization direction (EPR1, EPR2), and said light impinging on an analyzer (P2), said analyzer (P2) being substantially or 90°-crossed with respect to said polarizer (P1), **characterized in that**
the light passes successively through the polarizer (P1), a first λ/2 phase plate (1), a first optically addressable spatial light modulator (3) in the form of a λ/2 phase plate and a second λ/2 phase plate (3) and from there impinges on the analyzer (P2),
wherein
a) the first λ/2 phase plate (1) has a first indicatrix, said first indicatrix
- extending - when there is no external electrical field - in a first rest-position direction (R1);
- extending - when a first external electrical field (+E1) is present - in a first deflection direction (A), said first deflection direction (A) being rotated with respect to the first rest-position direction (R1) by a first, light-intensity-independent angle (+α) about the direction of the first external electrical field (+E1); and
- extending - when a second external electrical field (-E1) oppositely equal to the first external electrical field (+E1) is present - in a second deflection direction (B), said second deflection direction (B) being rotated with respect to the first rest-position direction (R1) by a second angle (-α), said second angle (-α) being oppositely equal to the first angle (+α);
b) the first light modulator (2) has a second indicatrix, said second indicatrix
- extending - when there is no external electrical field - in a second rest-position direction (R2);
- extending - when a third external electrical field (+E2) is present - in a third deflection direction (C), said third deflection direction (C) being rotated with respect to the second rest-position direction (R2) by a third angle (+β) about the direction of the third external electrical field (+E2);
- extending - when a fourth external electrical field (-E2) oppositely equal to the third external electrical field (+E2) is present - in a fourth deflection direction (D), said fourth deflection direction (D) being rotated with respect to the second rest-position direction (R2) by a fourth angle (-β), said fourth angle (-β) being oppositely equal to the third angle (+β);
- the values of the third and fourth angles (+β, -β) increasing with increasing light intensity up to a defined maximum value (ßmax) but not beyond said maximum value (βmax), and the third and fourth deflection directions (C, D), respectively, reaching first and second maximum deflection directions (Cmax, Dmax) when the values of the third and fourth angles (+β, -β) reach the maximum value (βmax);
c) the second λ/2 phase plate (3) has a third indicatrix, said third indicatrix
- extending - when there is no external electrical field - in the first rest-position direction (R1);
- extending - when a fifth external electrical field (+E3) is present - in the first deflection direction (A); and
- extending - when a sixth external electrical field (-E3) oppositely equal to the fifth external electrical field (+E3) is present - in the second deflection direction (B);
d) the first and second phase plates (1, 3) and the first light modulator (2) are so aligned with respect to each other and with respect to the polarizer (P1) that
- the first deflection direction (A) and the first maximum deflection direction (Cmax) extend parallel to each other and parallel or perpendicularly to the input polarization direction (EPR1, EPR2); or
- the second deflection direction (B) and the second maximum deflection direction (Dmax) extend parallel to each other and parallel or perpendicularly to the input polarization direction (EPR1, EPR2);
e) the first phase plate (1) is connected to the first or second external electrical field (+E1, -E1); the first light modulator (2) is connected to the third or fourth external electrical field (+E2, -E2) and the second phase plate (3) is connected to the fifth or sixth external electrical field (+E3, -E3); and
f) the first and second, third and fourth and fifth and sixth external electrical fields (+E1, -E1, +E2, -E2, +E3, -E3) are so selected that the first angle (α) and the maximum value (βmax) satisfy the condition 2α-βmax = n·45° + T, where n=0,1,2,3,... and T is a tolerance of ±5°.

24. Method according to claim 23, **characterized in that**
the first and second external electrical fields (+E1, -E1) are produced by a first plate capacitor (C1), the first phase plate (1) being positioned between the plates of said
first plate capacitor (C1), the third and fourth external electrical fields (+E2, -E2) being produced by a second plate capacitor (C2), the first light modulator (2) being positioned between the plates of said second plate capacitor (C2), and the fifth and sixth external electrical fields (+E3, -E3) being produced by a third plate capacitor (C3), the second phase plate (3) being positioned between the plates of said third plate capacitor (C3).

25. Method according to claim 24, **characterized in that**
the plate capacitors (C1, C2, C3) are each connected to an alternating voltage (U1, U2, U3) of substantially rectangular waveform as a function of time, wherein the zero crossings of all alternating voltages (U1, U2, U3) take place simultaneously.

26. Method for the intensity-dependent attenuation of light, said light passing through a polarizer (P1), said polarizer (P1) allowing linearly polarized light to pass in an input polarization direction (EPR1, EPR2), and said light impinging on an analyzer (P2, ST1, ST2, ST3), said analyzer (P2, ST1, ST2, ST3) being substantially or 90°-crossed with respect to said polarizer (P1), **characterized by**
a first λ/2 phase plate (1), a second optically addressable spatial light modulator (4) in the form of a λ/4 phase plate and by a mirror (5), wherein incident light (10a, 10b) passes successively through the polarizer (P1, ST1, ST2, ST3), the first λ/2 phase plate (1) and the second light modulator (4), impinges from there on the mirror (5) and then in the opposite direction passes once again through the second light modulator (4) and the first λ/2 phase plate (1) and from there impinges on the analyzer (P2, ST1, ST2, ST3), wherein
a) the first λ/2 phase plate (1) has a first indicatrix, said first indicatrix
- extending - when there is no external electrical field - in a first rest-position direction (R1);
- extending - when a first external electrical field (+E1) is present - in a first deflection direction (A), said first deflection direction (A) being rotated with respect to the first rest-position direction (R1) by a first, light-intensity-independent angle (+α) about the direction of the first external electrical field (+E1); and
- extending - when a second external electrical field (-E1) oppositely equal to the first external electrical field (+E1) is present - in a second deflection direction (B), said second deflection direction (B) being rotated with respect to the first rest-position direction (R1) by a second angle (-α), said second angle (-α) being oppositely equal to the first angle (+α);
b) the second light modulator (4) has a fourth indicatrix, said fourth indicatrix
- extending - when there is no external electrical field - in a second rest-position direction (R2);
- extending - when a seventh external electrical field (+E4) is present - in a third deflection direction (C), said third deflection direction (C) being rotated with respect to the second rest-position direction (R2) by a third angle (+β) about the direction of the seventh external electrical field (+E4);
- extending - when an eighth external electrical field (-E4) oppositely equal to the seventh external electrical field (+E4) is present - in a fourth deflection direction (D), said fourth deflection direction (D) being rotated with respect to the second rest-position direction (R2) by a fourth angle (-β), said fourth angle (-β) being oppositely equal to the third angle (+β);
- the values of the third and fourth angles (+β, -β) increasing with increasing light intensity up to a defined maximum value (βmax) but not beyond said maximum value (βmax), and the third and fourth deflection directions (C, D), respectively, reaching first and second maximum deflection directions (Cmax, Dmax) when the values of the third and fourth angles (+β, -β) reach the maximum value (βmax);
c) the first and second phase plates (1, 2) and the first light modulator (3) are so aligned with respect to each other and with respect to the polarizer (P11, ST1, ST2, ST3) that
- the first deflection direction (A) and the first maximum deflection direction (Cmax) extend parallel to each other and parallel or perpendicularly to the input polarization direction (EPR1, EPR2); or
- the second deflection direction (B) and the second maximum deflection direction (Dmax) extend parallel to each other and parallel or perpendicularly to the input polarization direction (EPR1, EPR2);
d) the first phase plate (1) is connected to the first or second external electrical field (+E1, -E1) and the second light modulator (4) is connected to the seventh or eighth external electrical field (+E4, -E4); and
e) the first and second and the seventh and eighth external electrical fields (+E1, -E1, +E4, -E4) are so selected that the first angle (α) and the maximum value (βmax) satisfy the condition 2α-βmax = n·45° + T, where n=0,1,2,3,... and T is a tolerance of ±5°.

27. Method according to claim 26, **characterized in that**
the first and second external electrical fields (+E1, -E1) are produced by a first plate capacitor (C1), the first phase plate (1) being positioned between the plates of said first plate capacitor (C1), and the seventh and eighth external electrical fields (+E4, - E4) being produced by a fourth plate capacitor (C4), the second light modulator (4) being positioned between the plates of said fourth plate capacitor (C4).

28. Method according to claim 27, **characterized in that**
the plate capacitors (C1, C4) are each connected to an alternating voltage (U1, U4) of substantially rectangular waveform as a function of time, wherein the zero crossings of the alternating voltages (U1, U4) take place simultaneously.

29. Method according to claim 25 or 28, **characterized in that**
the alternating voltages (U1, U2, U3, U4) originate from a common voltage source (20).

30. Method according to claim 26, **characterized in that**
the polarizer (P1) and the analyzer (P2) are formed jointly by a polarizing beam splitter (ST1, ST2, ST3), said beam splitter (ST1, ST2, ST3) acting as a polarizer for incident light (10a, 10b) and at the same time as an analyzer for light reflected by the mirror (5).

31. Method according to claim 30, **characterized in that**
the incident light (10a, 10b) is separated by the polarizing beam splitter (ST2, ST3)
- into a linearly polarized first subbeam (T1), said first subbeam (T1) being deflected in the polarizing beam splitter (ST2, ST3),
- and into a second subbeam (T2), said second subbeam (T2) being linearly polarized perpendicularly to the first subbeam (T1) and not being deflected in the polarizing beam splitter (ST2, ST3),
wherein the first and second subbeams (T1, T2) each pass separately from each other through the first λ/2 phase plate (1) and through the second light modulator (4) and impinge on the mirror (5) and from there in the reverse sequence pass once again through the second light modulator (4) and the first λ/2 phase plate (1) and once again enter the polarizing beam splitter (ST2, ST3), where
- the first subbeam (T1) is separated into a third subbeam (T11), said third subbeam (T11) being linearly polarized parallel to the first subbeam (T1) and being deflected in the polarizing beam splitter (ST2, ST3), and into a fourth subbeam (T12), said fourth subbeam (T12) being linearly polarized perpendicularly to the first subbeam (T1) and not being deflected in the polarizing beam splitter (ST2, ST3);
- and the second subbeam (T2) is separated into a fifth subbeam (T21), said fifth subbeam (T21) being linearly polarized perpendicularly to the second subbeam (T2) and being deflected in the polarizing beam splitter (ST2, ST3), and into a sixth subbeam (T22), said sixth subbeam (T22) being linearly polarized parallel to the second subbeam (T2) and not being deflected in the polarizing beam splitter (ST2, ST3).

32. Method according to claim 14, **characterized in that**
the path of the fourth subbeam (T12) coincides with the path of the fifth subbeam (T21).

33. Method according to any one of claims 23 to 32, **characterized in that**
a lens (22) images a visual field onto the light modulator (2, 4).

34. Device according to claim 33, **characterized in that**
an eyepiece (23) is so disposed that the image of the visual field can be viewed by means of the eyepiece (23).

35. Device according to claim 23, **characterized in that**
the first and second λ/2 phase plates (1, 2) are of identical construction and the first, second, fifth and sixth electric fields {+E1, -E1, +E3, -E3) each have the same value of electrical field strength.

## Revendications

1. Dispositif d'atténuation de la lumière en fonction de l'intensité, muni d'un polarisateur (P1), lequel fait passer de façon linéaire la lumière polarisée dans une direction de polarisation d'entrée (EPR1, EPR2), et d'un analyseur (P2) croisé ou perpendiculaire par rapport à ce dernier, **caractérisé par** une première et une deuxième plaques de phase λ/2 (1, 3) et un premier modulateur spatial de lumière (2), optiquement adressable et configuré en tant que plaque de phase λ/2, dans lequel la lumière incidente (10a, 10b) passe successivement par le polarisateur (P1), la première plaque de phase λ/2 (1), le premier modulateur de lumière (3) et la deuxième plaque de phase λ/2 (3) pour atteindre l'analyseur (P2) ; dans lequel
a) la première plaque de phase λ/2 (1) possède une première indicatrice, laquelle
- s'oriente sans champ électrique extérieur dans une première direction de position de repos (R1),
- s'oriente en entrant en contact avec un premier champ électrique extérieur (+E1) dans une première direction de déviation (A), qui par rapport à la première direction de position de repos (R1) accuse une rotation d'un premier angle indépendant de l'intensité lumineuse (+α) vers la direction du premier champ électrique extérieur (+E1), et
- s'oriente en entrant en contact avec un deuxième champ électrique extérieur (-E1) égal et opposé au premier champ électrique extérieur (+E1) dans une deuxième direction de déviation (B), qui par rapport à la première direction de position de repos (R1) accuse une rotation d'un deuxième angle (-α), lequel est égal et opposé au premier angle (+α)
b) le premier modulateur de lumière (2) possède une deuxième indicatrice, laquelle s'oriente sans champ électrique extérieur dans une deuxième direction de position de repos (R2),
- s'oriente en entrant en contact avec un troisième champ électrique extérieur (+E2) dans une troisième direction de déviation (C), laquelle par rapport à la deuxième direction de position de repos (R2) accuse une rotation d'un troisième angle (+β) vers la direction du troisième champ électrique extérieur (+E2),
- s'oriente en entrant en contact avec un quatrième champ électrique extérieur (-E2) égal et opposé au troisième champ électrique extérieur (+E2) dans une quatrième direction de déviation (D), laquelle accuse, par rapport à la deuxième direction de position de repos (R2), une rotation d'un quatrième angle (-β), égal et opposé au troisième angle (+β)
- la grandeur du troisième et du quatrième angle (+β, -β) augmentant avec une intensité lumineuse croissante jusqu'à une valeur maximale déterminée (βmax) sans toutefois dépasser cette dernière et la troisième ou la quatrième direction de déviation (C, D) atteignant une première ou deuxième direction de déviation limite (Cmax, Dmax), au cas où la grandeur du troisième ou du quatrième angle (+β, -β) atteindrait la valeur maximale (βmax),
c) la deuxième plaque de phase λ/2 (3) possède une troisième indicatrice, laquelle s'oriente sans champ électrique extérieur dans la première direction de position de repos (R1),
- s'oriente en entrant en contact avec un cinquième champ électrique extérieur (+E3) dans la première direction de déviation (A), et s'oriente en entrant en contact avec un sixième champ électrique extérieur (-E3) égal et opposé au cinquième champ électrique extérieur (+E3) dans la deuxième direction de déviation (B),
d) la première et la deuxième plaques de phase (1, 3) et le premier modulateur de lumière (2) sont orientés l'un vers l'autre et par rapport au polarisateur (P1), de telle sorte que
- la première direction de déviation (A) et la première direction de déviation limite (Cmax) sont parallèles l'une à l'autre et parallèles ou perpendiculaires à la direction de polarisation d'entrée (EPR1, EPR2), ou
- la deuxième direction de déviation (B) et la deuxième direction de déviation limite (Dmax) sont parallèles l'une à l'autre et parallèles ou perpendiculaires à la direction de polarisation d'entrée (EPR1, EPR2),
e) le premier ou le deuxième champ électrique extérieur (+E1, -E1) est appliqué sur la première plaque de phase (1), le troisième ou le quatrième champ électrique extérieur (+E2, -E2) est appliqué sur le premier modulateur de lumière (2) et le cinquième ou le sixième champ électrique extérieur (+E3, -E3) est appliqué sur la deuxième plaque de phase (3), et
f) le premier ou le deuxième, le troisième ou le quatrième et le cinquième ou le sixième champ électrique extérieur (+E1, -E1, +E2, -E2, +E3, -E3) sont sélectionnés de telle sorte que le premier angle (α) et la valeur maximale (βmax) remplissent la condition 2α-βmax = n*45° + T, sachant que n = 0,1,2,3,...et T est une tolérance de ±5°.

2. Dispositif selon la revendication 1, **caractérisé en ce que** la première et la deuxième plaque de phase λ/2 (1, 3) et le premier modulateur de lumière (2) sont disposés parallèlement les uns aux autres.

3. Dispositif selon la revendication 1, **caractérisé en ce que** le premier ou le deuxième champ électrique extérieur (+E1, -E1) est généré par un premier condensateur à plaques (C1), entre les plaques duquel se trouve la première plaque de phase (1), **en ce que** le troisième ou le quatrième champ électrique extérieur (+E2, -E2) est généré par un deuxième condensateur à plaques (C2), entre les plaques duquel se trouve le premier modulateur de lumière (2), et **en ce que** le cinquième ou le sixième champ électrique extérieur (+E3, -E3) est généré par un troisième condensateur à plaques (C3), entre les plaques duquel se trouve la deuxième plaque de phase (3).

4. Dispositif selon la revendication 3, **caractérisé en ce qu'**une tension alternative (U1, U2, U3) substantiellement rectangulaire dans le temps est appliquée à chaque condensateur à plaques (C1, C2, C3), sachant que les passages à zéro de toutes les tensions alternatives (U1, U2, U3) se produisent simultanément.

5. Dispositif d'atténuation de la lumière en fonction de l'intensité, muni d'un polarisateur (P1, ST1, ST2), lequel fait passer de façon linéaire la lumière polarisée dans une direction de polarisation d'entrée (EPR1, EPR2), et d'un analyseur (P2, ST1, ST2, ST3) croisé ou perpendiculaire par rapport à ce dernier, **caractérisé par** une première plaque de phase λ/2 (1) et un deuxième modulateur spatial de lumière (2), optiquement adressable et configuré en tant que plaque de phase λ/4 et par un miroir (5), la lumière incidente (10a, 10b) passant successivement par le polarisateur (P1, ST1, ST2, ST3), la première plaque de phase λ/2 (1) et le deuxième modulateur de lumière (4) pour atteindre l'analyseur (P2, SY1, ST2, ST3), dans lequel
a) la première plaque de phase λ/2 (1) possède une première indicatrice, laquelle
- s'oriente sans champ électrique extérieur dans une première direction de position de repos (R1),
- s'oriente en entrant en contact avec un premier champ électrique extérieur (+E1) dans une première direction de déviation (A), qui par rapport à la première direction de position de repos (R1) accuse une rotation d'un premier angle indépendant de l'intensité lumineuse (+α) vers la direction du premier champ électrique extérieur (+E1), et
- s'oriente en entrant en contact avec un deuxième champ électrique extérieur (-E1) égal et opposé au premier champ électrique extérieur (+E1) dans une deuxième direction de déviation (B), qui par rapport à la première direction de position de repos (R1) accuse une rotation d'un deuxième angle (-α), lequel est égal et opposé au premier angle (+α),
b) le deuxième modulateur de lumière (4) possède une quatrième indicatrice, laquelle s'oriente sans champ électrique extérieur dans une deuxième direction de position de repos (R2),
s'oriente en entrant en contact avec un septième champ électrique extérieur (+E4) dans une troisième direction de déviation (C), laquelle par rapport à la deuxième direction de position de repos (R2) accuse une rotation d'un troisième angle (+β) vers la direction du septième champ électrique extérieur (+E4),
- s'oriente en entrant en contact avec un huitième champ électrique extérieur (-E4) égal et opposé au septième champ électrique extérieur (+E4) dans une quatrième direction de déviation (D), laquelle accuse par rapport à la deuxième direction de position de repos (R2) une rotation d'un quatrième angle (-β) égal et opposé au troisième angle (+β),
- la grandeur du troisième et du quatrième angle (+β, -β) augmentant avec une intensité lumineuse croissante jusqu'à une valeur maximale déterminée (βmax) sans toutefois dépasser cette dernière et la troisième ou la quatrième direction de déviation (C, D) atteignant une première ou deuxième direction de déviation limite (Cmax, Dmax), au cas où la grandeur du troisième ou du quatrième angle (+β, -β) atteindrait la valeur maximale (βmax),
c) la première et la deuxième plaque de phase (1, 2) et le premier modulateur de lumière (3) sont orientés l'un envers l'autre et par rapport au polarisateur (P11, ST1, ST2, ST3), de telle sorte que
- la première direction de déviation (A) et la première direction de déviation limite (Cmax) sont parallèles l'une à l'autre et parallèles ou perpendiculaires à la direction de polarisation d'entrée (EPR1, EPR2), ou
- la deuxième direction de déviation (B) et la deuxième direction de déviation limite (Dmax) sont parallèles l'une à l'autre et parallèles ou perpendiculaires à la direction de polarisation d'entrée (EPR1, EPR2),
d) le premier ou le deuxième champ électrique extérieur (+E1, -E1) est appliqué sur la première plaque de phase (1), et le septième ou le huitième champ électrique extérieur (+E4, -E4) est appliqué sur le deuxième modulateur de lumière (2), et
e) le premier ou le deuxième et le septième ou le huitième champ électrique extérieur (+E1, -E1, +E4, -E4) sont sélectionnés de telle sorte que le premier angle (α) et la valeur maximale (βmax) remplissent la condition 2α-βmax = n*45° + T, sachant que n = 0,1,2,3,... et T est une tolérance de ±5°.

6. Dispositif selon la revendication 5, **caractérisé en ce que** le première plaque de phase λ/2 (1), le deuxième modulateur de lumière (4) et le miroir (5) sont disposés parallèlement les uns aux autres.

7. Dispositif selon la revendication 5, **caractérisé en ce que** le premier ou deuxième champ électrique extérieur (+E1, -E1) est généré par un premier condensateur à plaques (C1), entre les plaques duquel se trouve la première plaque de phase (1), et **en ce que** le septième ou huitième champ électrique extérieur (+E4, -E4) est généré par un quatrième condensateur à plaques (C4), entre les plaques duquel se trouve le deuxième modulateur de lumière (4).

8. Dispositif selon la revendication 7, **caractérisé en ce qu'**une tension alternative (U1, U4) substantiellement rectangulaire dans le temps est appliquée à chaque condensateur à plaques (C1, C4), sachant que les passages à zéro de toutes les tensions alternatives (U1, U4) se produisent simultanément.

9. Dispositif selon la revendication 3 ou 7, **caractérisé en ce que** les plaques des condensateurs à plaques (C1, C2, C3, C4) sont formées par des couches électriquement conductrices laissant au moins partiellement passer la lumière, lesquelles sont disposées directement sur les surfaces de passage de la lumière des plaques de phase (1, 3) ou des modulateurs de lumière (2, 4) ou parallèlement à ces dernières/derniers, avec un espacement ménagé par une couche sous-jacente transparente.

10. Dispositif selon la revendication 9, **caractérisé en ce que** les couches consistent en une mince couche métallique.

11. Dispositif selon la revendication 9, **caractérisé en ce que** les couches sont constituées en oxyde d'indium-étain.

12. Dispositif selon la revendication 4 ou 8, **caractérisé en ce que** les tensions alternatives (U1, U2, U3, U4) proviennent d'une source de tension commune (20).

13. Dispositif selon la revendication 5, **caractérisé en ce que** le polarisateur (P1) et l'analyseur (P2) sont formés communément par un séparateur de faisceau de polarisation (ST1, ST2, ST3), lequel fonctionne en tant que polarisateur pour une lumière incidente (10a, 10b) et en même temps en tant qu'analyseur pour une lumière réfléchie sur le miroir (5).

14. Dispositif selon la revendication 13, **caractérisé en ce que** la lumière incidente (10a, 10b) est décomposée par le séparateur de faisceau de polarisation (ST2, ST3)
- en un premier faisceau partiel linéairement polarisé (T1), lequel est dévié dans le séparateur de faisceau de polarisation (ST2, ST3),
- et en un deuxième faisceau partiel linéairement polarisé (T2) perpendiculairement au premier faisceau partiel (T1), lequel deuxième faisceau n'est pas dévié dans le séparateur de faisceau de polarisation (ST2, ST3),
dans lequel le premier et le deuxième faisceaux partiels (T1, T2) passent séparés l'un de l'autre respectivement par la première plaque de phase λ/2 (1) et par le deuxième modulateur de lumière (4) pour atteindre le miroir (5) puis repasser dans l'ordre inverse par le deuxième modulateur de lumière (4), puis par la première plaque de phase λ/2 (1) et arriver enfin à nouveau dans le séparateur de faisceau de polarisation (ST2, ST3), où
- le premier faisceau partiel (T1) est décomposé en un troisième faisceau partiel (T11), lequel est linéairement polarisé parallèlement au premier faisceau partiel (T1) et est dévié dans le séparateur de faisceau de polarisation (ST2, ST3), et est décomposé en un quatrième faisceau partiel linéairement polarisé (T12) perpendiculairement au premier faisceau partiel (T1), lequel n'est pas dévié dans le séparateur de faisceau de polarisation (ST2, ST3),
- et le deuxième faisceau partiel (T2) est décomposé en un cinquième faisceau partiel (T21), lequel est linéairement polarisé perpendiculairement au deuxième faisceau partiel (T2) et est dévié dans le séparateur de faisceau de polarisation (ST2, ST3), et est décomposé en un sixième faisceau partiel linéairement polarisé (T22) parallèlement au deuxième faisceau partiel (T2), lequel n'est pas dévié dans le séparateur de faisceau de polarisation (ST2, ST3)

15. Dispositif selon la revendication 14, **caractérisé en ce que** le séparateur de faisceau de polarisation (ST2, ST3) est configuré et disposé de telle sorte que le trajet du quatrième faisceau partiel (T12) coïncide avec le trajet du cinquième faisceau partiel (T21).

16. Dispositif selon la revendication 14 ou 15, **caractérisé en ce que** entre le séparateur de faisceau de polarisation (ST2, ST3) et la première plaque de phase λ/2 (1) est disposée au moins une surface de déviation de lumière (8, 9, 9'), laquelle dévie le premier ou le deuxième faisceau partiel (T1 T2) de telle façon que le premier et le deuxième faisceaux partiels (T1, T2) soient parallèles l'un par rapport à l'autre.

17. Dispositif selon la revendication 14 ou 15, **caractérisé en ce que** le séparateur de faisceau de polarisation (ST2, ST3) comprend au moins une surface de déviation de lumière (8, 9), laquelle dévie le premier ou le deuxième faisceau partiel (T1, T2) de telle sorte que le premier et le deuxième faisceaux partiels (T1, T2) soient parallèles l'un par rapport à l'autre sur le trajet entre la surface de déviation de lumière (8, 9) et le miroir (5).

18. Dispositif selon l'une quelconque des revendications précédentes, **caractérisé en ce qu'**un objectif (22) est disposé de telle sorte qu'il est en état de former un champ visuel sur le modulateur de lumière (2, 4).

19. Dispositif selon la revendication 18, **caractérisé en ce qu'**un oculaire (23) est disposé de telle sorte que l'image du champ visuel peut être observée au moyen de l'oculaire (23).

20. Dispositif selon la revendication 1 ou 5, **caractérisé en ce que** le modulateur de lumière (2, 4) comprend un film de cristal liquide en matériau smectique C chiral dont les molécules ont une hélice ferroélectrique déformable.

21. Dispositif selon la revendication 5, **caractérisé en ce qu'**un collimateur est disposé devant le miroir (5).

22. Dispositif selon la revendication 1, **caractérisé en ce que** la première et la deuxième plaques de phase λ/2 (1, 2) sont de construction semblable et le premier, deuxième, cinquième et sixième champs électriques (+E1, -E1, +E3, -E3) présentent respectivement la même intensité de champ électrique.

23. Procédé d'atténuation, en fonction de l'intensité, de la lumière passant par un polarisateur (P1), lequel fait passer de la lumière linéairement polarisée dans une direction de polarisation d'entrée (EPR1, EPR2), et arrivant sur un analyseur (P2) croisé ou perpendiculaire par rapport à ce dernier, **caractérisé en ce que** la lumière passe successivement par le polarisateur (P1), une première plaque de phase λ/2 (1), un premier modulateur spatial de lumière (3) optiquement adressable et configuré en tant plaque de phase λ/2 et une deuxième plaque de phase λ/2 (3) pour atteindre l'analyseur (P2), dans lequel
a) la première plaque de phase λ/2 (1) possède une première indicatrice, laquelle
- s'oriente sans champ électrique extérieur dans une première direction de position de repos (R1),
- s'oriente en entrant en contact avec un premier champ électrique extérieur (+E1) dans une première direction de déviation (A), qui par rapport à la première direction de position de repos (R1) accuse une rotation d'un premier angle indépendant de l'intensité lumineuse (+α) vers la direction du premier champ électrique extérieur (+E1), et
- s'oriente en entrant en contact avec un deuxième champ électrique extérieur (-E1) égal et opposé au premier champ électrique extérieur (+E1) dans une deuxième direction de déviation (B), qui par rapport à la première direction de position de repos (R1) accuse une rotation d'un deuxième angle (-α), lequel est égal et opposé au premier angle (+α)
b) le premier modulateur de lumière (2) possède une deuxième indicatrice, laquelle s'oriente sans champ électrique extérieur dans une deuxième direction de position de repos (R2),
- s'oriente en entrant en contact avec un troisième champ électrique extérieur (+E2) dans une troisième direction de déviation (C), laquelle par rapport à la deuxième direction de position de repos (R2) accuse une rotation d'un troisième angle (+β) vers la direction du troisième champ électrique extérieur (+E2),
- s'oriente en entrant en contact avec un quatrième champ électrique extérieur (-E2) égal et opposé au troisième champ électrique extérieur (+E2) dans une quatrième direction de déviation (D), laquelle accuse par rapport à la deuxième direction de position de repos (R2) une rotation d'un quatrième angle (-β) égal et opposé au troisième angle (+β),
- la grandeur du troisième et du quatrième angle (+β, -β) augmentant avec une intensité lumineuse croissante jusqu'à une valeur maximale déterminée (βmax) sans toutefois dépasser cette dernière et la troisième ou la quatrième direction de déviation (C, D) atteignant une première ou deuxième direction de déviation limite (Cmax, Dmax), au cas où la grandeur du troisième ou du quatrième angle (+β, -β) atteindrait la valeur maximale (βmax),
c) la deuxième plaque de phase λ/2 (3) possède une troisième indicatrice, laquelle s'oriente sans champ électrique extérieur dans la première direction de position de repos (R1),
- s'oriente en entrant en contact avec un cinquième champ électrique extérieur (+E3) dans la première direction de déviation (A), et
s'oriente en entrant en contact avec un sixième champ électrique extérieur (-E3) égal et opposé au cinquième champ électrique extérieur (+E3) dans la deuxième direction de déviation (B),
d) la première et la deuxième plaque de phase (1, 3) et le premier modulateur de lumière (2) sont orientés l'un envers l'autre et par rapport au polarisateur (P1), de telle sorte que
- la première direction de déviation (A) et la première direction de déviation limite (Cmax) sont parallèles l'une à l'autre et parallèles ou verticales à la direction de polarisation d'entrée (EPR1, EPR2), ou
- la deuxième direction de déviation (B) et la deuxième direction de déviation limite (Dmax) sont parallèles l'une à l'autre et parallèles ou verticales à la direction de polarisation d'entrée (EPR1, EPR2),
e) le premier ou le deuxième champ électrique extérieur (+E1, -E1) est appliqué sur la première plaque de phase (1), le troisième ou le quatrième champ électrique extérieur (+E2, -E2) est appliqué sur le premier modulateur de lumière (2) et le cinquième ou le sixième champ électrique extérieur (+E3, -E3) est appliqué sur la deuxième plaque de phase (3), et
f) le premier ou le deuxième, le troisième ou le quatrième et le cinquième ou le sixième champ électrique extérieur (+E1, -E1, +E2, -E2, +E3, -E3) sont sélectionnés de telle sorte que le premier angle (α) et la valeur maximale (βmax) remplissent la condition 2α-βmax = n*45° + T, sachant que n = 0,1,2,3,... et T est une tolérance de ±5°.

24. Procédé selon la revendication 23, **caractérisé en ce que** le premier ou deuxième champ électrique extérieur (+E1, -E1) est généré par un premier condensateur à plaques (C1), entre les plaques duquel se trouve la première plaque de phase (1), **en ce que** le troisième ou le quatrième champ électrique extérieur (+E2, -E2) est généré par un deuxième condensateur à plaques (C2), entre les plaques duquel se trouve le premier modulateur de lumière (2), et **en ce que** le cinquième ou le sixième champ électrique extérieur (+E3, -E3) est généré par un troisième condensateur à plaques (C3), entre les plaques duquel se trouve la deuxième plaque de phase (3).

25. Procédé selon la revendication 24, **caractérisé en ce qu'**une tension alternative (U1, U2, U3) substantiellement rectangulaire dans le temps est appliquée à chaque condensateur à plaques (C1, C2, C3), sachant que les passages à zéro de toutes les tensions alternatives (U1, U2, U3) se produisent simultanément.

26. Procédé d'atténuation, en fonction de l'intensité, de la lumière passant par un polarisateur (P1), lequel fait passer de la lumière linéairement polarisée dans une direction de polarisation d'entrée (EPR1, EPR2), et arrivant sur un analyseur (P2) croisé ou perpendiculaire par rapport à ce dernier, **caractérisé par**
une première plaque de phase λ/2 (1), un deuxième modulateur spatial de lumière (4), optiquement adressable et configuré en tant que plaque de phase λ/4 et un miroir (5), dans lequel la lumière incidente (10a, 10b) passe successivement par le polarisateur (P1, ST1, ST2, ST3), la première plaque de phase λ/2 (1) et le deuxième modulateur de lumière (4) pour atteindre le miroir (5) puis repasser dans l'ordre inverse par le deuxième modulateur de lumière (4), puis par la première plaque de phase λ/2 (1) et arriver enfin à nouveau à l'analyseur (P2, ST1, ST2, ST3), dans lequel
a) la première plaque de phase λ/2 (1) possède une première indicatrice, laquelle
- s'oriente sans champ électrique extérieur dans une première direction de position de repos (R1),
- s'oriente en entrant en contact avec un premier champ électrique extérieur (+E1) dans une première direction de déviation (A), qui par rapport à la première direction de position de repos (R1) accuse une rotation d'un premier angle indépendant de l'intensité lumineuse (+α) vers la direction du premier champ électrique extérieur (+E1), et
- s'oriente en entrant en contact avec un deuxième champ électrique extérieur (-E1) égal et opposé au premier champ électrique extérieur (+E1) dans une deuxième direction de déviation (B), qui par rapport à la première direction de position de repos (R1) accuse une rotation d'un deuxième angle (-α), lequel est égal et opposé au premier angle (+α),
b) le deuxième modulateur de lumière (4) possède une quatrième indicatrice,
- laquelle s'oriente sans champ électrique extérieur dans une deuxième direction de position de repos (R2),
- s'oriente en entrant en contact avec un septième champ électrique extérieur (+E4) dans une troisième direction de déviation (C), laquelle par rapport à la deuxième direction de position de repos (R2) accuse une rotation d'un troisième angle (+β) vers la direction du septième champ électrique extérieur (+E4),
- s'oriente en entrant en contact avec un huitième champ électrique extérieur (-E4) égal et opposé au septième champ électrique extérieur (+E4) dans une quatrième direction de déviation (D), laquelle par rapport à la deuxième direction de position de repos (R2) accuse une rotation d'un quatrième angle (-β) égal et opposé au troisième angle (+β),
- la grandeur du troisième et du quatrième angles (+β, -β) augmentant avec une intensité lumineuse croissante jusqu'à une valeur maximale déterminée (βmax) sans toutefois dépasser cette dernière et la troisième ou la quatrième direction de déviation (C, D) atteignant une première ou deuxième direction de déviation limite (Cmax, Dmax), au cas où la grandeur du troisième ou du quatrième angle (+β, -β) atteindrait la valeur maximale (βmax),
c) la première et la deuxième plaque de phase (1, 2) et le premier modulateur de lumière (3) sont orientés l'un envers l'autre et par rapport au polarisateur (P11, ST1, ST2, ST3), de telle sorte que
- la première direction de déviation (A) et la première direction de déviation limite (Cmax) sont parallèles l'une à l'autre et parallèles ou perpendiculaires à la direction de polarisation d'entrée (EPR1, EPR2), ou
- la deuxième direction de déviation (B) et la deuxième direction de déviation limite (Dmax) sont parallèles l'une à l'autre et parallèles ou perpendiculaires à la direction de polarisation d'entrée (EPR1, EPR2),
d) le premier ou le deuxième champ électrique extérieur (+E1, -E1) est appliqué sur la première plaque de phase (1), et le septième ou le huitième champ électrique extérieur (+E4, -E4) est appliqué sur le deuxième modulateur de lumière (4), et
e) le premier ou le deuxième et le septième ou le huitième champ électrique extérieur (+E1, -E1, +E4, -E4) sont sélectionnés de telle sorte que le premier angle (α) et la valeur maximale (βmax) remplissent la condition 2α-βmax = n*45° + T, sachant que n = 0,1,2,3,... et T est une tolérance de ±5°.

27. Procédé selon la revendication 26, **caractérisé en ce que** le premier ou deuxième champ électrique extérieur (+E1, -E1) est généré par un premier condensateur à plaques (C1) entre les plaques duquel se trouve la première plaque de phase (1), et **en ce que** le septième ou huitième champ électrique extérieur (+E4, -E4) est généré par un quatrième condensateur à plaques (C4), entre les plaques duquel se trouve le deuxième modulateur de lumière (4).

28. Procédé selon la revendication 27, **caractérisé en ce qu'**une tension alternative (U1, U4) substantiellement rectangulaire dans le temps est appliquée à chaque condensateur à plaques (C1, C4), sachant que les passages à zéro de toutes les tensions alternatives (U1, U4) se produisent simultanément.

29. Procédé selon la revendication 25 ou 28, **caractérisé en ce que** les tensions alternatives (U1, U2, U3, U4) proviennent d'une source de tension commune (20).

30. Procédé selon la revendication 26, **caractérisé en ce que** le polarisateur (P1) et l'analyseur (P2) sont conjointement constitués d'un séparateur de faisceau de polarisation (ST1, ST2, ST3), lequel fonctionne en tant que polarisateur pour la lumière incidente (10a, 10b) et en même temps en tant qu'analyseur pour la lumière réfléchie sur le miroir (5).

31. Procédé selon la revendication 30, **caractérisé en ce que** la lumière incidente (10a, 10b) est décomposée par le séparateur de faisceau de polarisation (ST2, ST3)
- en un premier faisceau partiel linéairement polarisé (T1), lequel est dévié dans le séparateur de faisceau de polarisation (ST2, ST3),
- et en un deuxième faisceau partiel linéairement polarisé (T2) perpendiculairement au premier faisceau partiel (T1), lequel n'est pas dévié dans le séparateur de faisceau de polarisation (ST2, ST3),
dans lequel le premier et le deuxième faisceau partiel (T1, T2) passent séparés l'un de l'autre respectivement par la première plaque de phase λ/2 (1) et par le deuxième modulateur de lumière (4) pour atteindre le miroir (5) puis repasser dans l'ordre inverse par le deuxième modulateur de lumière (4), puis par la première plaque de phase λ/2 (1) et arriver enfin à nouveau dans le séparateur de faisceau de polarisation (ST2, ST3), où
- le premier faisceau partiel (T1 est décomposé en un troisième faisceau partiel (T11), lequel est linéairement polarisé parallèlement au premier faisceau partiel (T1) et est dévié dans le séparateur de faisceau de polarisation (ST2, ST3), et est décomposé en un quatrième faisceau partiel (T12) linéairement polarisé perpendiculairement au premier faisceau partiel (T1), lequel n'est pas dévié dans le séparateur de faisceau de polarisation (ST2, ST3),
- et le deuxième faisceau partiel (T2) est décomposé en un cinquième faisceau partiel (T21), lequel est linéairement polarisé perpendiculairement; au deuxième faisceau partiel (T2) et est dévié dans le séparateur de faisceau de polarisation (ST2, ST3), et est décomposé en un sixième faisceau partiel (T22) linéairement polarisé parallèlement au deuxième faisceau partiel (T2), lequel n'est pas dévié dans le séparateur de faisceau de polarisation (ST2, ST3).

32. Procédé selon la revendication 14, **caractérisé en ce que** le trajet du quatrième faisceau partiel (T12) coïncide avec le trajet du cinquième faisceau partiel (T21).

33. Procédé selon l'une quelconque des revendications 28 à 32, **caractérisé en ce qu'**un objectif (22) représente un champ visuel sur le modulateur de lumière (2, 4)

34. Procédé selon la revendication 33, **caractérisé en ce qu'**un oculaire (23) est disposé de telle sorte que l'image du champ visuel peut être observable au moyen de l'oculaire (23).

35. Dispositif selon la revendication 28, **caractérisé en ce que** la première et la deuxième plaque de phase λ/2 (1, 2) sont de construction semblable et **en ce que** le premier, deuxième, cinquième et sixième champ électrique (+E1, -E1, +E3, - E3) présentent respectivement la même intensité de champ électrique.
